# EUROPEAN PATENT APPLICATION

(11) **EP 4 589 395 A1**
(43) Date of publication of application: **23.07.2025**
(21) Application number: 23865267.1
(22) Date of filing: 29.08.2023
(51) Int. Cl.: G05B 19/416, G05B 19/4103

(54) **NUMERICAL CONTROL DEVICE, MACHINE TOOL, NUMERICAL CONTROL METHOD, AND NUMERICAL CONTROL PROGRAM**

(30) Priority: 12.09.2022 JP 2022144334
(71) Applicant: BROTHER KOGYO KABUSHIKI KAISHA, Nagoya-shi, Aichi 467-8561 (JP)
(72) Inventor: ISHIKAWA Tomoya, Nagoya-shi, Aichi 467-8562 (JP); OGI Shunsuke, Nagoya-shi, Aichi 460-0003 (JP)
(74) Representative: Becker, Eberhard
(86) International application number: PCT/JP2023/031130
(87) International publication number: WO 2024/057910

(57) **Abstract**

Provided are a numerical control device, a machine tool, a numerical control method, and a numerical control program which contribute in achieving an advantage that an increase in moving time of a moving part is suppressed while suppressing the amount of computation for calculating a speed curve prior to acceleration/deceleration processing. A CPU of this numerical control device reads the current block Nnow and a prefetch block and determines a target block Nd and a target speed Vd at a command point for the target block Nd. The CPU calculates a first rising speed V1 at the position where tip acceleration becomes zero from the current tip acceleration. The CPU calculates a reverse interpolation point Prev. Every time when the reverse interpolation point Prev is calculated, the CPU calculates a second rising speed V2 at the position where the tip acceleration becomes zero from the tip acceleration at the reverse interpolation point Prev.

## Description

### Technical Field

The disclosure relates to a numerical control device, a machine tool, a numerical control method, and a numerical control program.

### Related Art

There are cases where a machine operates a movement part based on an NC program, for example. In such case, if the machine suddenly changes the velocity or acceleration of the movement part, there is a possibility that malfunctions may occur, such as the machine breaking down, or the movement part becoming vibratory and deviating from the ideal movement path. Similarly, if the machine moves the movement part at a high speed, there is a possibility that malfunctions may occur. Therefore, to suppress the occurrence of malfunctions, limitations are established on the velocity, acceleration, and jerk (rate of change of acceleration) of the movement part. The machine performs an acceleration/deceleration process of the movement part so that the actual velocity, acceleration, and jerk of the movement part do not exceed the established limitations.

For example, the numerical control device described in Patent Document 1 performs a pre-interpolation acceleration/deceleration process in tip point control. In the numerical control device, permissible values are established for the velocity, acceleration, and jerk of each axis in the programming coordinate system and the machine coordinate system on the path. The numerical control device calculates the respective permissible values for the velocity, acceleration, and jerk of the tip point in each interval of the divided movement path. The numerical control device calculates a velocity curve that does not exceed the calculated permissible values in the movement path, and performs the acceleration/deceleration process according to the calculated velocity curve.

### Citation List

### Patent Literature

Patent Document 1: Japanese Patent Application Laid-Open Publication No. 2013-097736

### SUMMARY OF INVENTION

### Technical Problem

In the numerical control device, the permissible values for velocity and acceleration within each interval remain constant at the respective calculated permissible values. The ideal permissible values for velocity and acceleration within each interval are not necessarily constant. Therefore, if the width of the interval is large, there is a possibility that a difference may arise between the calculated permissible values and the ideal permissible values. In other words, there is a possibility that the movement time of the movement part may become longer because the velocity does not increase to the ideal velocity, or it takes time for the velocity to reach the ideal velocity. On the other hand, if the width of the interval is narrowed to reduce the difference between the calculated permissible values and the ideal permissible values, there is a possibility that the amount of calculation required to calculate the velocity curve prior to the acceleration/deceleration process may increase.

An objective of the invention is to provide a numerical control device, a machine tool, a numerical control method, and a numerical control program which contribute in achieving an advantage that an increase in moving time of a moving part is suppressed while suppressing the amount of computation for calculating a speed curve prior to acceleration/deceleration processing.

### Solution to Problem

A numerical control device of claim 1 is a numerical control device controlling a position and a velocity of a movement part that moves relatively with respect to a target object by reading an NC program formed by multiple blocks indicating command points on a movement path of the movement part and processing the blocks sequentially. The numerical control device includes: a reading part, reading a current block, which is a processing target among the blocks, and look-ahead blocks, whose processing order follows the current block among the blocks; a decision part, deciding a target block, which is a target among the current block and the look-ahead blocks read by the reading part, and deciding a target velocity which is a velocity as a target of the movement part at the command point of the target block that is decided; a first calculation part, calculating, on the movement path of the movement part, a first rise velocity based on a maximum jerk as an upper limit of an allowed jerk, a current velocity of the movement part, and a current acceleration of the movement part, wherein the first rise velocity is a velocity of the movement part at a first rise point, the first rise point being a position where an acceleration of the movement part changes to a first predetermined acceleration from the current acceleration of the movement part; a reverse interpolation part, performing a reverse interpolation process as a process sequentially calculating reverse interpolation points that are positions where the movement part moves, from the command point of the target block decided by the decision part toward a start point of the current block in the movement path of the movement part, wherein an initial reverse interpolation point as the reverse interpolation point that is initially calculated, the velocity of the movement part at the initial reverse interpolation point, and the acceleration of the movement part at the initial reverse interpolation point are respectively the command point of the target block, the target velocity, and a second predetermined acceleration, and the reverse interpolation point to be calculated next to the current reverse interpolation point is a position where the movement part moves by an amount of movement for a predetermined time based on the velocity of the movement part and the acceleration of the movement part at the current reverse interpolation point, a maximum acceleration as an upper limit of an allowed acceleration, and the maximum jerk; and a second calculation part, calculating, on the movement path of the movement part, from the reverse interpolation point toward the start point of the current block, a second rise velocity based on the maximum jerk, the velocity of the movement part at the reverse interpolation point as calculated by the reverse interpolation part and the acceleration of the movement part at the reverse interpolation point every time when the reverse interpolation part calculates the reverse interpolation point, wherein the second rise velocity is the velocity of the movement part at a second rise point, the second rise point being a position where the acceleration of the movement part changes from the acceleration of the movement part at the reverse interpolation point to a third predetermined acceleration. The reverse interpolation part calculates the reverse interpolation point until the second rise velocity calculated by the second calculation part becomes equal to or greater than the first rise velocity calculated by the first calculation part.

According to the numerical control device of claim 1, the reverse interpolation points are calculated by the reverse interpolation part from until the second rise velocity becomes equal to or greater than the first rise velocity. By performing the acceleration/deceleration process in accordance with the reverse interpolation part, even if the velocity of the movement part increases to the maximum along the tip path, the movement part is suppressed from not decelerating to the target velocity at the command point of the target block. Therefore, the numerical control device can more easily move the movement part at the maximum tip velocity at which the movement part can decelerate to the target velocity at the command point of the target block. Furthermore, the reverse interpolation part calculates the reverse interpolation points when the acceleration/deceleration process is performed, and the velocity curve of the movement part is calculated. Thus, in the case where the acceleration/deceleration process is performed by using the reverse interpolation part, the amount of calculation performed by the numerical control device before the acceleration/deceleration process is easily suppressed as compared to the case where the velocity curve of the movement part is calculated by performing the acceleration/deceleration process. Therefore, the reverse interpolation part contributes to the advantage of suppressing the increase in the movement time of the movement part while suppressing the amount of calculation for calculating the velocity curve before the acceleration/deceleration process.

The numerical control device of claim 2 may include: a third calculation part, calculating a start point velocity as an upper limit of an allowed velocity of the movement part at a start point of the look-ahead blocks; and a first determination part, determining whether there is a transition block in which the start point velocity becomes equal to or less than the second rise velocity, among the look-ahead blocks arranged in the processing order between the look-ahead block that is one block after the current block and the look-ahead block to which the second rise point belongs. In a case where the first determination part may determine that there is the transition block, the decision part determines the block that is one block before the transition block whose start point velocity is lowest in the processing order as the target block, and determine the lowest start point velocity of the transition block as the target velocity.

In such case, reverse interpolation is performed so that the movement part can decelerate to the start point velocity of the look-ahead block one block after the newly determined target block as the target velocity at the command point of the newly determined target block. Therefore, the decision part contributes to the advantage of suppressing the increase in the movement time of the movement part while suppressing the amount of calculation for calculating the velocity curve of the movement part before the acceleration/deceleration process, while following the allowed upper limit of the movement part at the command point of the block.

The numerical control device of claim 3 may include: a second determination part, determining, in a case where a movement distance of the movement part from the current position of the movement part in the current block to a direction toward the command point of the target block is set as positive and the movement distance of the movement part from the command point of the target block toward the current position of the movement part in the current block is set as negative, whether a total distance is equal to or greater than a remaining movement, wherein the total distance is a total of the movement distance of the movement part from the current position of the movement part in the current block to the first rise point, the movement distance of the movement part from the second rise point to the reverse interpolation point, and the movement distance of the movement part from the reverse interpolation point to the command point of the target block, and the remaining distance is the movement distance of the movement part from the current position of the movement part in the current block to the command point of the target block; and a first velocity control part, controlling, in a case where the second determination part determines that the total distance is equal to or greater than the remaining movement, the velocity of the movement part by using a deceleration based on a maximum deceleration, which is an upper limit of allowed deceleration, and the maximum jerk, so that the velocity of the movement part does not become less than the target velocity.

In this case, the first velocity control part controls the velocity of the movement part to the maximum extent within the range of the allowed deceleration and jerk, and controls the velocity of the movement part to decelerate to the target velocity at the command point of the target block. As a result, the deceleration time of the movement part is suppressed from increasing. Therefore, the numerical control device can more easily secure a longer acceleration time for the movement part. Consequently, the first velocity control part contributes to the advantage of suppressing the increase in movement time of the movement part.

The numerical control device of claim 4 may include: a second determination part, determining, in a case where a movement distance of the movement part from the current position of the movement part in the current block to a direction toward the command point of the target block is set as positive and the movement distance of the movement part from the command point of the target block toward the current position of the movement part in the current block is set as negative, whether a total distance is equal to or greater than a remaining movement, wherein the total distance is a total of the movement distance of the movement part from the current position of the movement part in the current block to the first rise point, the movement distance of the movement part from the second rise point to the reverse interpolation point, and the movement distance of the movement part from the reverse interpolation point to the command point of the target block, and the remaining distance is the movement distance of the movement part from the current position of the movement part in the current block to the command point of the target block; and a fourth calculation part, calculating a velocity limit, which is a maximum velocity that follows an upper limit of an allowed velocity of the movement part at each interpolation point on the movement path; and a second velocity control part, controlling, in a case where the second determination part determines that the total distance is not equal to or greater than the remaining movement, the velocity of the movement part by using an acceleration based on the maximum acceleration and the maximum jerk, so that the velocity of the movement part at the first rise point does not exceed the velocity limit at the first rise point calculated by the fourth calculation part.

In this case, the second velocity control part controls the velocity of the movement part to increase to the maximum extent within the range of the allowed acceleration and jerk, so that the velocity of the movement part at the first rise point does not exceed the velocity limit at the first rise point. Consequently, the second velocity control part contributes to the advantage of suppressing the increase in movement time of the movement part.

In the numerical control device of claim 5, in a case where a number of the blocks is greater than a number corresponding to a predetermined order, the reading part may sequentially read, as the look-ahead blocks, from the block that is one block after the current block in the processing order to a look-ahead end point block, which is the block after the predetermined order from the current block in the processing order. The reverse interpolation part may calculate the reverse interpolation point in a case where the reading part reads the look-ahead end point block.

In this case, the reverse interpolation part does not calculate the reverse interpolation point Prev every time when the look-ahead block is read. Thus, the reverse interpolation part contributes to the advantage of suppressing the increase in the processing load for calculating the reverse interpolation point.

The numerical control device of claim 6 may include: a block processing part, controlling a position and the velocity of the movement part by processing the current block read by the reading part. In a case where the block processing part processes up to the command point of the current block, the reading part may set a next block, which is one block after the block processed as the current block by the block processing part in the processing order as the current block, and newly read the block that is after the next block for the predetermined order in the processing order as the look-ahead end point block, and in a case where the reading part newly reads the look-ahead end point block, the decision part may newly decide the target block and also newly decides the target velocity.

In this case, every time when the block processing part processes the current block, the reading part newly reads one block as a look-ahead block. In other words, the reading part does not always read all of the multiple blocks as look-ahead blocks at once. Consequently, the reading part contributes to the advantage of suppressing the control load required for reading the look-ahead blocks.

A machine tool of claim 7 includes: the numerical control device of claim 1; a holding part, holding a workpiece; and a spindle, to which a tool for machining the workpiece is mounted. The workpiece held by the holding part is machined by using at least three linear axes and one rotary axis, the movement path is defined by a relative position of a tip of the tool with respect to the workpiece, the maximum jerk is an allowed upper limit of a relative jerk of the tip of the tool with respect to the workpiece, the maximum acceleration is an upper limit of a relative acceleration of the tip of the tool with respect to the workpiece, where an acceleration of each of the linear axes and the rotary axis is respectively equal to or less than an allowed acceleration of each of the linear axes and the rotary axis, and the velocity of the movement part is defined by a relative velocity of the tip of the tool with respect to the workpiece.

The machine tool of claim 7 contributes to the same advantages as the numerical control device of claim 1.

The machine tool as claimed in claim 8 may include the three linear axes and two rotary axes that rotate the holding part.

In this case, the machine tool contributes to the advantage of performing complex machining operations.

The machine tool of claim 9 may include the three linear axes and two rotary axes that change a posture of the spindle with respect to the workpiece.

In this case, the machine tool contributes to the advantage of performing complex machining operations.

The machine tool of claim 9 may include the three linear axes, a rotary axis that changes a posture of the spindle with respect to the workpiece, and a rotary axis that rotates the holding part.

In this case, the machine tool contributes to the advantage of performing complex machining operations.

A numerical control method of claim 11 is a numerical control method for controlling, by using a numerical control device, a position and a velocity of a movement part that moves relatively with respect to a target object by reading an NC program formed by multiple blocks indicating command points on a movement path of the movement part and processing the blocks sequentially. The numerical control method includes: a reading process of reading a current block, which is a processing target among the blocks, and look-ahead blocks, whose processing order follows the current block among the blocks; a decision process of deciding a target block, which is a target among the current block and the look-ahead blocks read in the reading process, and deciding a target velocity which is a velocity as a target the movement part at the command point of the target block that is decided; a first calculation process of calculating, on the movement path of the movement part, a first rise velocity based on a maximum jerk as an upper limit of an allowed jerk, a current velocity of the movement part, and a current acceleration of the movement part, wherein the first rise velocity is a velocity of the movement part at a first rise point, the first rise point being a position where an acceleration of the movement part changes to a first predetermined acceleration from the current acceleration of the movement part; a reverse interpolation process of performing a reverse interpolation process as a process sequentially calculating reverse interpolation points that are positions where the movement part moves, from the command point of the target block decided in the decision process toward a start point of the current block in the movement path of the movement part, wherein an initial reverse interpolation point as the reverse interpolation point that is initially calculated, the velocity of the movement part at the initial reverse interpolation point, and the acceleration of the movement part at the initial reverse interpolation point are respectively the command point of the target block, the target velocity, and a second predetermined acceleration, and the reverse interpolation point to be calculated next to the current reverse interpolation point is a position where the movement part moves by an amount of movement for a predetermined time based on the velocity of the movement part and the acceleration of the movement part at the current reverse interpolation point, a maximum acceleration as an upper limit of an allowed acceleration, and the maximum jerk; and a second calculation process of calculating, on the movement path of the movement part, from the reverse interpolation point toward the start point of the current block, a second rise velocity based on the maximum jerk, the velocity of the movement part at the reverse interpolation point as calculated in the reverse interpolation process and the acceleration of the movement part at the reverse interpolation point every time when the reverse interpolation point is calculated in the reverse interpolation process, wherein the second rise velocity is the velocity of the movement part at a second rise point, the second rise point being a position where the acceleration of the movement part changes from the acceleration of the movement part at the reverse interpolation point to a third predetermined acceleration. In the reverse interpolation process, the reverse interpolation point is calculated until the second rise velocity calculated in the second calculation process becomes equal to or greater than the first rise velocity calculated in the first calculation process.

The numerical control method of claim 11 contributes to the same advantages as the numerical control method of claim 1.

A numerical control program of claim 12 is a numerical control program that causes a computer of a numerical control device for controlling a position and a velocity of a movement part that moves relatively with respect to a target object by reading an NC program formed by multiple blocks indicating command points on a movement path of the movement part and processing the blocks sequentially to execute: a reading process of reading a current block, which is a processing target among the blocks, and look-ahead blocks, whose processing order follows the current block among the blocks; a decision process of deciding a target block, which is a target among the current block and the look-ahead blocks read in the reading process, and deciding a target velocity which is a velocity as a target the movement part at the command point of the target block that is decided; a first calculation process of calculating, on the movement path of the movement part, a first rise velocity based on a maximum jerk as an upper limit of an allowed jerk, a current velocity of the movement part, and a current acceleration of the movement part, wherein the first rise velocity is a velocity of the movement part at a first rise point, the first rise point being a position where an acceleration of the movement part changes to a first predetermined acceleration from the current acceleration of the movement part; a reverse interpolation process of performing a reverse interpolation process as a process sequentially calculating reverse interpolation points that are positions where the movement part moves, from the command point of the target block decided in the decision process toward a start point of the current block in the movement path of the movement part, wherein an initial reverse interpolation point as the reverse interpolation point that is initially calculated, the velocity of the movement part at the initial reverse interpolation point, and the acceleration of the movement part at the initial reverse interpolation point are respectively the command point of the target block, the target velocity, and a second predetermined acceleration, and the reverse interpolation point to be calculated next to the current reverse interpolation point is a position where the movement part moves by an amount of movement for a predetermined time based on the velocity of the movement part and the acceleration of the movement part at the current reverse interpolation point, a maximum acceleration as an upper limit of an allowed acceleration, and the maximum jerk; and a second calculation process of calculating, on the movement path of the movement part, from the reverse interpolation point toward the start point of the current block, a second rise velocity based on the maximum jerk, the velocity of the movement part at the reverse interpolation point as calculated in the reverse interpolation process and the acceleration of the movement part at the reverse interpolation point every time when the reverse interpolation point is calculated in the reverse interpolation process, wherein the second rise velocity is the velocity of the movement part at a second rise point, the second rise point being a position where the acceleration of the movement part changes from the acceleration of the movement part at the reverse interpolation point to a third predetermined acceleration. In the reverse interpolation process, the reverse interpolation point is calculated until the second rise velocity calculated in the second calculation process becomes equal to or greater than the first rise velocity calculated in the first calculation process.

The numerical control program of claim 12 contributes to the same advantages as the numerical control device of claim 1.

### BRIEF DESCRIPTION OF DRAWINGS

FIG. 1 is a perspective view of a machine tool 1.
FIG. 2 is a block diagram showing the electrical configuration of the machine tool 1.
FIG. 3 is a diagram for describing an NC program 441.
FIG. 4 is a diagram for describing a block information storage area 431.
FIG. 5 is a graph showing the tip velocity with respect to time in each block at the start of tip point control.
FIG. 6 is a graph following FIG. 5.
FIG. 7 is a graph following FIG. 6.
FIG. 8 is a graph following FIG. 7.
FIG. 9 is a graph following FIG. 8.
FIG. 10 is a graph following FIG. 9.
FIG. 11 is a graph following FIG. 10.
FIG. 12 is a graph following FIG. 11.
FIG. 13 is a graph following FIG. 12.
FIG. 14 is a graph following FIG. 13.
FIG. 15 is a graph following FIG. 14.
FIG. 16 is a graph following FIG. 15.
FIG. 17 is a graph following FIG. 16.
FIG. 18 is a graph following FIG. 17.
FIG. 19 is a graph following FIG. 18.
FIG. 20 is a graph following FIG. 19.
FIG. 21 is a graph following FIG. 20.
FIG. 22 is a graph showing the tip velocity with respect to time in each block, and a graph showing the tip acceleration or tip deceleration with respect to time in each block, when tip point control ends.
FIG. 23 is a flowchart of a main process.
FIG. 24 is a flowchart of the main process.
FIG. 25 is a flowchart of a reverse interpolation process.
FIG. 26 is a flowchart of a first velocity control process.
FIG. 27 is a flowchart of the first velocity control process.
FIG. 28 is a flowchart of a second velocity control process.

### DESCRIPTION OF EMBODIMENTS

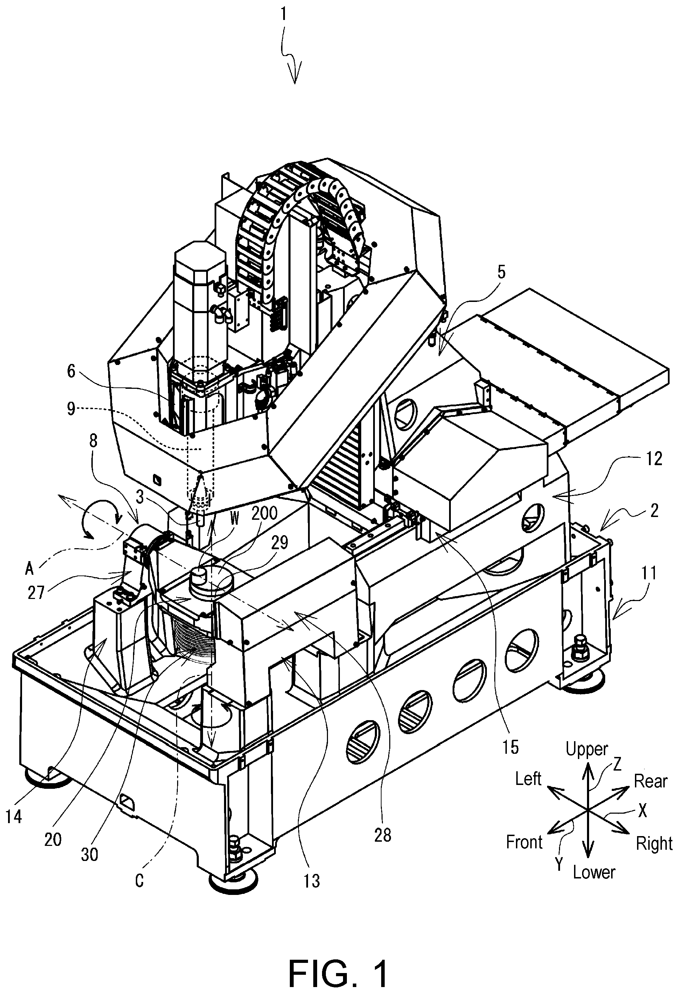

The embodiments of the disclosure are described with reference to the drawings. The following description uses left-right, front-back, and upper-lower directions as indicated by arrows in the figures. The left-right, front-back, and up-down directions of a machine tool 1 correspond to the X-axis, Y-axis, and Z-axis directions of the machine tool 1, respectively. The machine tool 1 shown in FIG. 1 is a composite machine capable of performing both cutting and turning operations on a workpiece W.

Referring to FIG. 1, the structure of the machine tool 1 is described. The machine tool 1 includes a base 2, a Y-axis movement mechanism (not shown), an X-axis movement mechanism (not shown), a Z-axis movement mechanism (not shown), a mobile object 15, a column 5, a spindle head 6, a spindle 9, a support device 8, etc. The base 2 includes a frame 11, a spindle base 12, a right base 13, a left base 14, etc. The frame 11 is an approximately rectangular parallelepiped structure elongated in the front-rear direction. The spindle base 12 is formed in an approximately rectangular parallelepiped shape elongated in the front-rear direction and is provided on the rear of the upper surface of the frame 11. The right base 13 is provided on the front right of the upper surface of the frame 11. The left base 14 is established on the front left of the upper surface of the frame 11. The right base 13 and the left base 14 support the support device 8 on the respective upper surfaces.

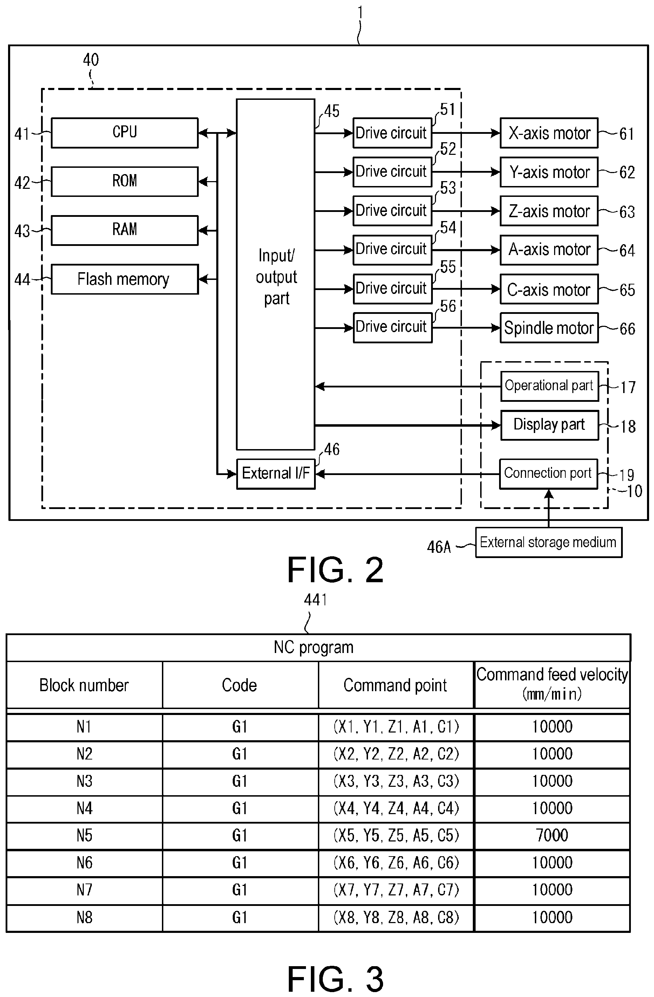

The Y-axis movement mechanism is provided on the upper surface of the spindle base 12 and includes a Y-axis motor 62 (refer to FIG. 2), etc. The Y-axis movement mechanism moves a substantially planar-shaped mobile object 15 in the Y-axis direction by the drive of the Y-axis motor 62. The X-axis movement mechanism is provided on the upper surface of the mobile object 15 and includes an X-axis motor 61 (refer to FIG. 2), etc. The X-axis movement mechanism moves a column 5 in the X-axis direction by the drive of the X-axis motor 61. The column 5 is capable of moving in the X-axis and Y-axis directions on the base 2 through the Y-axis movement mechanism, the mobile object 15, and the X-axis movement mechanism. The Z-axis movement mechanism is provided on the front surface of the column 5 and includes a Z-axis motor 63 (refer to FIG. 2), etc. The Z-axis movement mechanism moves the spindle head 6 in the Z-axis direction by the drive of the Z-axis motor 63.

The spindle 9 is provided inside the spindle head 6. A tool mounting hole (not shown) is provided in the lower part of the spindle 9. The tool 3 is mounted in the tool mounting hole. Hereafter, the tip of the tool 3 is referred to as "tool tip". In the embodiment, in the case where the tool 3 extends downward from the tool mounting hole, the tool tip is the lower end of the tool 3. The X-axis movement mechanism, the Y-axis movement mechanism, and the Z-axis movement mechanism each move the tool 3 mounted on the spindle 9 relative to the workpiece W in the X-axis direction, the Y-axis direction, and the Z-axis direction, respectively. The spindle 9 rotates by the drive of the spindle motor 66 (refer to FIG. 2) provided on the upper part of the spindle head 6.

The support device 8 is fixed on the upper surfaces of the right base 13 and the left base 14. The support device 8 includes an A-axis stand 20, a left support stand 27, a right drive mechanism 28, a turntable 29, a C-axis drive part 30, etc. The A-axis stand 20 is a plate-shaped part with a substantially rectangular shape in plan view, where the inclination angle becomes 0 degrees in the case where the upper surface of the A-axis stand 20 is horizontal. The left support stand 27 rotatably supports a support shaft (not shown) parallel to the X-axis direction. The bottom part of the left support stand 27 is fixed to the upper surface of the left base 14.

The right drive mechanism 28 is positioned on the right side of the A-axis stand 20. The right drive mechanism 28 houses an A-axis motor 64 (refer to FIG. 2) and others. In response to the rotation of the A-axis motor 64, the A-axis stand 20 rotates around the support shaft. The axis that rotates the A-axis stand 20 is the A-axis. The right drive mechanism 28 rotates the workpiece W around the A-axis relative to the tool 3. The A-axis stand 20 tilts the workpiece W in any direction relative to the tool 3 mounted on the spindle 9 by inclining at any angle around the A-axis.

The turntable 29 is rotatably provided substantially at the center on the upper surface of the A-axis stand 20. The turntable 29 has a disc shape. The C-axis drive part 30 is provided on the lower surface of the A-axis stand 20 and is connected to the turntable 29 through a hole (not shown) provided substantially at the center of the A-axis stand 20. The C-axis drive part 30 includes a rotation axis (not shown), a C-axis motor 65 (refer to FIG. 2), etc. The rotation axis extends in a direction perpendicular to the turntable 29. The rotation axis is fixed to the turntable 29. The C-axis motor 65 is fixed to the rotation axis. Therefore, when the C-axis motor 65 rotates the rotation axis, the turntable 29 rotates around the C-axis. The C-axis extends perpendicularly to the upper surface of the turntable 29. The direction in which the C-axis extends rotates according to the rotation of the A-axis. The turntable 29 holds the workpiece W through the jig 200. The jig 200 is fixed to the upper surface of the turntable 29. The C-axis drive part 30 rotates the workpiece W around the C-axis relative to the tool 3.

According to the configuration, the machine tool 1 linearly moves the tool 3 relative to the workpiece W along the X-axis, Y-axis, and Z-axis, and rotates the tool 3 relative to the workpiece W around the A-axis and C-axis. In this way, the machine tool 1 changes the position and the posture of the tool 3 relative to the workpiece W. The machine tool 1 processes the workpiece W by rotating the tool 3 while changing the position and posture of the tool 3 relative to the workpiece W.

Hereinafter, X-axis, Y-axis, Z-axis, A-axis, and C-axis are collectively referred to as "drive axis". The relative movement path of the tool tip relative to the workpiece W, the relative movement distance of the tool tip relative to the workpiece W, the relative position of the tool tip relative to the workpiece W, the relative velocity of the tool tip relative to the workpiece W, the relative acceleration of the tool tip relative to the workpiece W, the relative deceleration of the tool tip relative to the workpiece W, and the relative jerk of the tool tip relative to the workpiece W are respectively referred to as "tip path", "tip movement amount", "tip point", "tip velocity", "tip acceleration", "tip deceleration", and "tip jerk". The velocity of the drive axis, the acceleration of the drive axis, and the deceleration of the drive axis are respectively referred to as "axis velocity", "axis acceleration", and "axis deceleration".

In the embodiment, the positive and negative values of axis velocity, axis acceleration, and axis deceleration are defined by the positive and negative values of coordinates. Furthermore, in the embodiment, the positive and negative values of velocity are defined as follows: the movement distance approaching the destination based on the current position is defined as "positive", and the movement distance moving away from the destination (movement distance going back to the past) based on the current position is defined as "negative". The destination, as will be described in detail later, is the command point of blocks subsequent to the current block in the processing order, for example, the command point of the look-ahead block. The velocity approaching the destination based on the current position is defined as "positive", and the velocity moving away from the destination based on the current position is defined as "negative". The acceleration that increases the velocity in the positive direction is defined as "positive", and the acceleration that brings the velocity from "positive" to close to "0 mm/min" is defined as "negative".

In principle, the acceleration that is "positive" or "0 m/s^2" is simply referred to as "acceleration", and the absolute value of "negative" acceleration is referred to as "deceleration". For example, "deceleration increases" or "deceleration becomes larger" means that negative acceleration becomes larger in the negative direction. In other words, "deceleration increases" or "deceleration becomes larger" means that the change amount in velocity during deceleration becomes larger. However, to simplify the description, the expressions of "negative" acceleration and "negative" or "0" deceleration is allowed, and the expressions may be simply referred to as acceleration or deceleration as is. However, for the reverse interpolation velocity Vrev and the second rise velocity V2 described later, the velocity approaching the current position based on the destination is defined as "positive". The reverse interpolation acceleration Arev described later is defined as "positive" for acceleration that increases the reverse interpolation velocity Vrev in the positive direction. The reverse interpolation velocity Vrev, the second rise velocity V2, and the reverse interpolation acceleration Arev never become "negative". Furthermore, in the embodiment, jerk (m/s^3) refers to the absolute value of the change amount in acceleration or the absolute value of the change amount in deceleration.

Referring to FIG. 2, the electrical configuration of the machine tool 1 is described. The machine tool 1 includes a numerical control device 40. The numerical control device 40 is stored on the inner side of a control case. The numerical control device 40 controls the operation of the machine tool 1 based on an NC program. An operation panel 10 is provided on the outer wall surface of a cover that covers the machine tool 1. The operation panel 10 includes an operational part 17, a display part 18, and a connection port 19. The operational part 17 performs various settings of the numerical control device 40. The display part 18 displays various screens, messages, alarms, etc. The connection port 19 includes a terminal for to which an external storage medium 46A is attached. An example of the external storage medium 46A is a USB memory.

The numerical control device 40 includes a CPU 41, Ra OM 42, a RAM 43, a flash memory 44, an input/output part 45, an external interface (I/F) 46, and drive circuits 51 to 56. The CPU 41 controls the operation of the machine tool 1. The CPU 41 executes a control program stored in the flash memory 44. In the following, the computation cycle by the CPU 41 is simply referred to as "cycle". The ROM 42 stores various setting information. The RAM 43 stores various data generated during the execution of various processes. The flash memory 44 stores the control program, allowable values described later, the NC program, etc.

The input/output part 45 performs input and output of various signals between the drive circuits 51 to 56, the operational part 17, and the display part 18. The drive circuit 51 and the X-axis motor 61, the drive circuit 52 and the Y-axis motor 62, the drive circuit 53 and the Z-axis motor 63, the drive circuit 54 and the A-axis motor 64, the drive circuit 55 and the C-axis motor 65, and the drive circuit 56 and the spindle motor 66 are connected respectively. The drive circuits 51 to 56 output pulse signals output by the CPU 41 to the X-axis motor 61, the Y-axis motor 62, the Z-axis motor 63, the A-axis motor 64, the C-axis motor 65, and the spindle motor 66 respectively. The X-axis motor 61, the Y-axis motor 62, the Z-axis motor 63, the A-axis motor 64, and the C-axis motor 65 are all servo motors. The external I/F 46 is an interface element for reading information from the external storage medium 46A attached to the connection port 19. For example, the CPU 41 reads the control program stored in the external storage medium 46A via the external I/F 46.

Referring to FIG. 3, the NC program is described. The NC program is formed by multiple blocks arranged in the order of block numbers. The block number indicates the processing order of each block. Hereinafter, unless specifically limited, multiple blocks refer to multiple blocks included in the NC program. Each of the multiple blocks includes codes such as G-codes, and commands at least a tip point. In the following, the tip point commanded by each block, that is, the position through which the tool tip passes based on the NC program, is referred to as a "command point".

Each block differs in whether it commands a tip velocity depending on the type of the codes. For example, each block does not command a tip velocity in the case where the code is G0 (positioning), and commands a tip velocity in the case where the code is G1 (linear interpolation). In the following, the tip velocity commanded by each block, that is, the tip velocity based on the NC program, is referred to as "command feed velocity".

For example, a NC program 441 is formed by 8 blocks with block numbers N1 to N8. The code of each of the 8 blocks all indicate G1 (linear interpolation). The command point of each of the 8 blocks is indicated by X coordinate, Y coordinate, Z coordinate, A coordinate, and C coordinate. The command feed velocity of 7 blocks other than a block number N5 all indicate 10000mm/min. The command feed velocity of the block with the block number N5 indicates 7000mm/min.

In the following, a block with block number N may be denoted as block N, where N is a natural number, and a parameter corresponding to block N may be denoted as parameter (N). For example, the command feed velocity "7000mm/min" of the block N5 may be denoted as command feed velocity (N5). Furthermore, the command point of a block may be referred to as "the end point of the block". The end point (command point) of a block N-1 is connected to the start point of a block N.

The CPU 41 reads the NC program from the flash memory 44. The CPU 41 controls at least the tip point and the tip velocity based on at least the command point of the command point and the command feed velocity by processing multiple blocks in the order of block numbers. In the following, the block with the last processing order among the multiple blocks is referred to as "final block". In the NC program 441, a block N8, which is the last in the processing order, becomes the final block. The block that is any one of the multiple blocks and is currently the control target is referred to as "current block". In other words, the current block is the block to which the current tip point belongs among the multiple blocks. For example, at the start of the execution of the NC program 441, the block N1 becomes the current control target, so the block N1 becomes the current block. Furthermore, in the multiple blocks, the direction in which the processing order advances is referred to as "forward direction", and the direction in which the processing order returns is referred to as "reverse direction". In the NC program 441, the direction from the start point of the block N1 to the end point of the block N8 is the forward direction, and the direction from the end point of the block N8 to the start point of the block N1 is the reverse direction.

The allowable value is described. The allowable value is a constant and is determined based on a factor such as the load applied to the tool 3 during machining of the workpiece W. In the embodiment, the allowable value includes the maximum axis velocity difference, THE maximum tip jerk, THE maximum axis acceleration for each drive axis, and the maximum axis velocity for each drive axis. The maximum axis velocity difference indicates the upper limit (maximum value that is allowed) of the difference between the axis velocity at the end point (N-1) and the axis velocity at the start point (N) for each drive axis. For example, the maximum axis velocity difference for X-axis is the upper limit of the allowed difference between the X-axis velocity at the end point (N-1) and the X-axis velocity at the start point (N). The maximum tip jerk is the upper limit of the allowed tip jerk in the tip path. In other words, the maximum tip jerk is the allowed upper limit of the relative jerk of the tool tip with respect to the workpiece W per cycle. In the following, the maximum tip jerk per unit time (per cycle in the embodiment) is referred to as "unit maximum tip jerk". That is, the unit maximum tip jerk is the amount by which the tip acceleration or the tip deceleration changes during one cycle. The maximum axis acceleration indicates the upper limit of the allowed axis acceleration or axis deceleration for each drive axis. For example, the maximum axis acceleration for X-axis is the upper limit of the allowed axis acceleration for X-axis. The maximum axis velocity indicates the upper limit of the allowed velocity of the drive axis, for each drive axis. For example, the maximum axis velocity for X-axis is the upper limit of the allowed velocity for X-axis.

The maximum tip acceleration, the maximum tip deceleration, the passing allowable velocity, the velocity limit, the first connection velocity, the second connection velocity, the connection velocity, and the start point velocity are described as the calculation targets in the embodiment. The maximum tip acceleration is the upper limit of the allowed tip acceleration in the tip path. Specifically, the maximum tip acceleration is the upper limit of the tip acceleration at which the absolute value of the axis acceleration for all drive axes is less than or equal to the maximum axis acceleration of the corresponding drive axis, for each interpolation point on the tip path and the tip velocity at that interpolation point. The maximum tip acceleration is influenced by the rotary axes (A-axis and C-axis). Therefore, the maximum tip acceleration depends not only on the interpolation point but also on the tip velocity at the interpolation point.

The maximum tip deceleration is the upper limit of the allowed tip deceleration in the tip path. Specifically, the maximum tip deceleration is the upper limit of the tip deceleration at which the absolute value of the axis deceleration for all drive axes is less than or equal to the maximum axis acceleration of the corresponding drive axis, for each interpolation point on the tip path and the tip velocity at that interpolation point. The maximum tip deceleration is influenced by the rotary axes (A-axis and C-axis). Therefore, the maximum tip deceleration depends not only on the interpolation point but also on the tip velocity at the interpolation point.

The passing allowable velocity is the upper limit of the tip velocity at which the absolute value of the axis acceleration for all drive axes is less than or equal to the maximum axis acceleration of the corresponding drive axis, and the absolute value of the axis velocity for all drive axes is less than or equal to the maximum axis velocity of the corresponding drive axis, at each interpolation point on the tip path. The velocity limit is the upper limit of the allowed tip velocity at each interpolation point on the tip path. In the embodiment, the velocity limit is the minimum value between the command feed velocity (N) and the passing allowable velocity. In other words, the velocity limit is the velocity at which the passing allowable velocity is limited by the command feed velocity (N). In the case where the command feed velocity is not commanded by the NC program, such as the case where the code is G0 (positioning), the velocity limit is not limited by the command feed velocity, so the velocity limit becomes the same value as the passing allowable velocity.

The first connection velocity (N) is, for all drive axes, the upper limit of the tip velocity at the start point (N) at which the absolute value of the difference between the axis velocity at the end point (N-1) and the axis velocity at the start point (N) is less than or equal to the maximum axis velocity difference of the corresponding drive axis. The second connection velocity (N) is the upper limit of the tip velocity at the start point (N) at which the absolute value of the difference between the maximum tip acceleration at the end point (N-1) and the maximum tip acceleration at the start point (N) is less than or equal to the unit maximum tip jerk. The connection velocity (N) is the minimum value between the first connection velocity (N) and the second connection velocity (N).

The first connection velocity of the block that is the initial one in the processing order among multiple blocks is set to 0 mm/min. The second connection velocity of the block that is the initial one in the processing order among multiple blocks is set to 0 mm/min. Therefore, the connection velocity of the block that is the initial one in the processing order among multiple blocks is set to 0 mm/min.

The start point velocity (N) is the upper limit of the tip velocity allowed at the start point (N). In the embodiment, the start point velocity (N) is the minimum value among the connection velocity (N), the command feed velocity (N), and the command feed velocity (N-1). In other words, the start point velocity (N) is the velocity at which the connection velocity (N) is limited by the command feed velocity (N). In the case where the command feed velocity is not commanded by the NC program, such as the case where the code is G0 (positioning), the start point velocity (N) is not limited by the command feed velocity (N) and the command feed velocity (N-1). Therefore, the start point velocity (N) becomes the same value as the connection velocity (N). The start point velocity of the block that is the initial one in the processing order among multiple blocks is set to 0 mm/min.

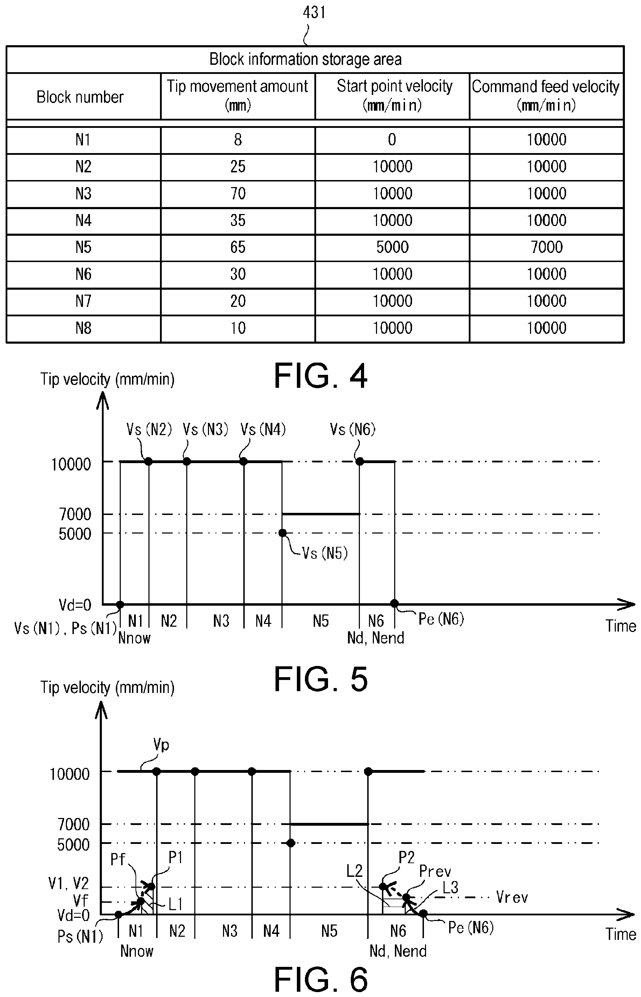

Referring to FIG. 4, a block information storage area 431 is described. The block information storage area 431 is provided in the RAM 43. In the block information storage area 431, the tip movement amount (mm), the start point velocity (mm/min), and the command feed velocity (mm/min) are stored in correspondence with block numbers.

The tip movement amount (N) is the movement distance of the tool tip from the start point (N) to the end point (N). The CPU 41 calculates the distance between the command point (N-1) and the command point (N) as the tip movement amount (N). The tip movement amount (N1) is the movement distance of the tool tip from the current tip point (e.g., , the origin) to the command point (N1).

Referring to FIG. s 5 to 21, the overview of tip point control in the embodiment is described by using as an example the case where the CPU 41 exerts tip point control based on the NC program 441 shown in FIG. 3. In FIGs. 5 to 21, N1 to N8 indicate the block N1 to the block N8, respectively. In FIGs. 5 to 21, in the velocity curve of the tool tip, the solid line extending from a start point Ps (N1) indicates the velocity curve of the actual movement of the tool tip, while the broken line and the solid line extending from an end point Pe of a target block Nd indicate the virtual velocity curve calculated by the CPU 41. Before performing the acceleration/deceleration process and reverse interpolation to be described afterwards, the CPU 41 stores the information in each area of the block information storage area 431.

Specifically, the CPU 41 reads the block N1 as a current block Nnow. The CPU 41 calculates the tip movement amount (N1), the start point velocity (N1), and the command feed velocity (N1), and stores, in the block information storage area 431, the calculated tip movement amount, the start point velocity, and the command feed velocity in correspondence with the block N1.

In the following, one or more blocks among multiple blocks with a processing order later than the current block Nnow are referred to as look-ahead blocks. The CPU 41 reads the look-ahead blocks. The upper limit of the number of the look-ahead blocks that the CPU 41 is able to read is referred to as the "look-ahead upper limit". The look-ahead upper limit is stored in the flash memory 44. The look-ahead upper limit is not limited to a specific value, but in the embodiment, the look-ahead upper limit is 5.

The CPU 41 reads 5 blocks, i.e., the block N2 to the block N6, as the look-ahead blocks according to the look-ahead upper limit (5 in the embodiment). In such case, the block N6 becomes a look-ahead end point block Nend. The look-ahead end point block Nend is the block that is the last in the processing order among the look-ahead blocks. In other words, when the look-ahead upper limit (5) is set as the predetermined order (5^{th} position), the look-ahead end point block Nend is a block whose processing order is after the predetermined order (5^{th} position) from the current block Nnow.

The CPU 41 calculates the tip movement amount (N2-N6), the start point velocity (N2-N6), and the command feed velocity (N2-N6) for each of the read blocks N2 to N6, and stores the calculated tip movement amount, start point velocity, and command feed velocity in correspondence with each of the blocks N2 to N6 in the block information storage area 431.

As shown in FIG. 5, the CPU 41 determines the target block Nd as the block N6, which is the look-ahead end point block Nend, and sets the target velocity Vd at the end point Pe (N6) to "0 mm/min". The target block Nd is one of the current block and any of the look-ahead blocks, and is a block that serves as the target. The target velocity Vd is the tip velocity as the target. By doing this, the CPU 41 ensures that the tool tip stops at the end point Pe (N6).

As shown in FIG. 6, the CPU 41 moves the tip point from the start point Ps(N1) to the current tip point (hereinafter referred to as "current position Pf") by performing an acceleration/deceleration process from the start point Ps(N1). The acceleration/deceleration process in the embodiment includes a first velocity control process and a second velocity control process. As will be described in detail later, in the first velocity control process, a process relating to acceleration or deceleration of the tool tip is mainly performed, while in the second velocity control process, the deceleration of the tool tip is mainly performed.

The CPU 41 performs the first velocity control process in the case where the total distance of a tip movement amount L1, a tip movement amount L2, and a tip movement amount L3 is less than the remaining movement. The CPU 41 performs the second velocity control process in the case where the total distance of the tip movement amount L1, the tip movement amount L2, and the tip movement amount L3 is equal to or greater than the remaining movement. The tip movement amount L1 is the tip movement amount from the current position Pf to a first rise point P1 described later. In the tip path, the tip movement amount L1 becomes "positive" in the case where the first rise point P1 is positioned in the forward direction relative to the current position Pf, and becomes "negative" in the case where the first rise point P1 is positioned in the reverse direction relative to the current position Pf. In the case where the tip acceleration is 0 m/s^2, the first rise point P1 coincides with the current position Pf, so the tip movement amount L1 becomes 0 mm.

The tip movement amount L2 is the tip movement amount from a second rise point P2 described later to a reverse interpolation point Prev described later. As will be explained in detail later, the reverse interpolation point Prev is not positioned in the reverse direction relative to the second rise point P2 in the tip path. Therefore, the tip movement amount L2 does not become "negative". The tip movement amount L3 is the tip movement amount from the end point Pe of the target block Nd to the reverse interpolation point Prev. As will be explained in detail later, the end point Pe of the target block Nd is not positioned in the reverse direction relative to the reverse interpolation point Prev in the tip path. Therefore, the tip movement amount L3 does not become "negative". The remaining movement is the tip movement amount from the current position Pf to the end point Pe of the target block Nd.

For example, in FIG. 6, the total distance of the tip movement amount L1, the tip movement amount L2, and the tip movement amount L3 is less than the remaining movement. Therefore, the first velocity control process is performed, and the current tip velocity Vf increases. In this case, the CPU 41 calculates the velocity limit Vp at each interpolation point.

The first rise point P1 is defined as one of the interpolation points. The first rise point P1 is a position in the forward direction relative to the current position Pf in the tip path and a position where the tip acceleration changes from the current tip acceleration to a first predetermined acceleration, or a position in the reverse direction relative to the current position Pf in the tip path and a position where the tip deceleration changes from the current tip deceleration to a first predetermined deceleration. The first predetermined acceleration and the first predetermined deceleration are not limited to specific values, but values that can be considered as substantially 0 m/s^2 are preferable, and in the embodiment, the first predetermined acceleration and the first predetermined deceleration are 0 m/s^2. Hereinafter, for the first rise point P1, the position in the forward direction relative to the current position Pf in the tip path and where the tip acceleration changes from the current tip acceleration to 0 m/s^2 is denoted as "first rise point P1 (forward direction)", and the position in the reverse direction relative to the current position Pf in the tip path and where the tip deceleration changes from the current tip deceleration to 0 m/s^2 is denoted as "first rise point P1 (reverse direction)". When not specifically distinguishing between the first rise point P1 (forward direction) and the first rise point P1 (reverse direction), it is simply denoted as "first rise point P1". In FIG. 6, since the first rise point P1 (forward direction) is positioned in the forward direction relative to the current position Pf, the tip movement amount L1 becomes a positive value.

Furthermore, the tip velocity at the first rise point P1 is referred to as "first rise velocity V1". The first rise velocity V1 at the first rise point P1 (forward direction) is denoted as "first rise velocity V1 (forward direction)", and the first rise velocity V1 at the first rise point P1 (reverse direction) is denoted as "first rise velocity V1 (reverse direction)". When not specifically distinguishing between the first rise velocity V1 (forward direction) and the first rise velocity V1 (reverse direction), it is simply denoted as "first rise velocity V1".

In FIG. 6, the velocity limit Vp at the first rise point P1 is, for example, 10000 mm/min. Therefore, in the first velocity control process, the tip velocity is controlled so that the first rise velocity V1 does not exceed the velocity limit Vp (10000 mm/min) at the first rise point P1.

The CPU 41 performs reverse interpolation in the reverse direction from the end point Pe (N6) while performing acceleration according to the first velocity control process. Specifically, the CPU 41 sequentially calculates the reverse interpolation point Prev, the reverse interpolation velocity Vrev, and the reverse interpolation acceleration Arev until a condition described later is satisfied. Hereinafter, the initially calculated reverse interpolation point Prev is referred to as "initial reverse interpolation point Prev". The initial reverse interpolation point Prev, the reverse interpolation velocity Vrev at the initial reverse interpolation point Prev, and the reverse interpolation acceleration Arev at the initial reverse interpolation point Prev are set as the command point of the target block Nd (i.e., the end point Pe (N6)), the target velocity Vd, and the second predetermined acceleration, respectively. The second predetermined acceleration is not limited to a specific value, but a value that can be considered substantially 0 m/s^2 is preferable, and in the embodiment, the second predetermined acceleration is 0 m/s^2. The reverse interpolation point Prev calculated next to the current reverse interpolation point Prev is the position where the tool tip moves by an amount of movement for a predetermined time at a velocity based on the current reverse interpolation velocity Vrev, the current reverse interpolation acceleration Arev, the maximum tip acceleration, and the maximum tip jerk in the reverse direction from the current reverse interpolation point Prev on the tip path. More specifically, the CPU 41 virtually increases the tip acceleration from 0 m/s^2 so that the tip jerk does not exceed the maximum tip jerk, and accelerates the tip velocity from the target velocity Vd for a predetermined time in the reverse direction from the end point Pe of the target block Nd so that the tip acceleration does not exceed the maximum tip acceleration. The predetermined time is a length of one or multiple cycles, and in the embodiment, the predetermined time is the length of one cycle. It may also be that the predetermined time does not have a constant length. In the embodiment, unless specifically limited, the reverse interpolation point Prev, the reverse interpolation velocity Vrev, and the reverse interpolation acceleration Arev indicate the current reverse interpolation point Prev, the current reverse interpolation velocity Vrev, and the current reverse interpolation acceleration Arev, respectively.

By calculating the reverse interpolation point Prev, the velocity curve of the tool tip from the end point Pe (N6) to the reverse interpolation point Prev is calculated. The CPU 41 calculates the second rise velocity V2. The second rise velocity V2 is the tip velocity at the second rise point P2. The second rise point P2 is the position where, on the tip path, the tip acceleration becomes a third predetermined acceleration from the tip acceleration at the reverse interpolation point Prev in the reverse direction from the reverse interpolation point Prev. The third predetermined acceleration is not limited to a specific value, but a value that can be considered substantially 0 m/s^2 is preferable, and in the embodiment, the third predetermined acceleration is 0 m/s^2. After calculating the first rise velocity V1, the CPU 41 repeatedly performs the reverse interpolation and the calculation of the second rise velocity V2 until the second rise velocity V2 becomes equal to or greater than the first rise velocity V1.

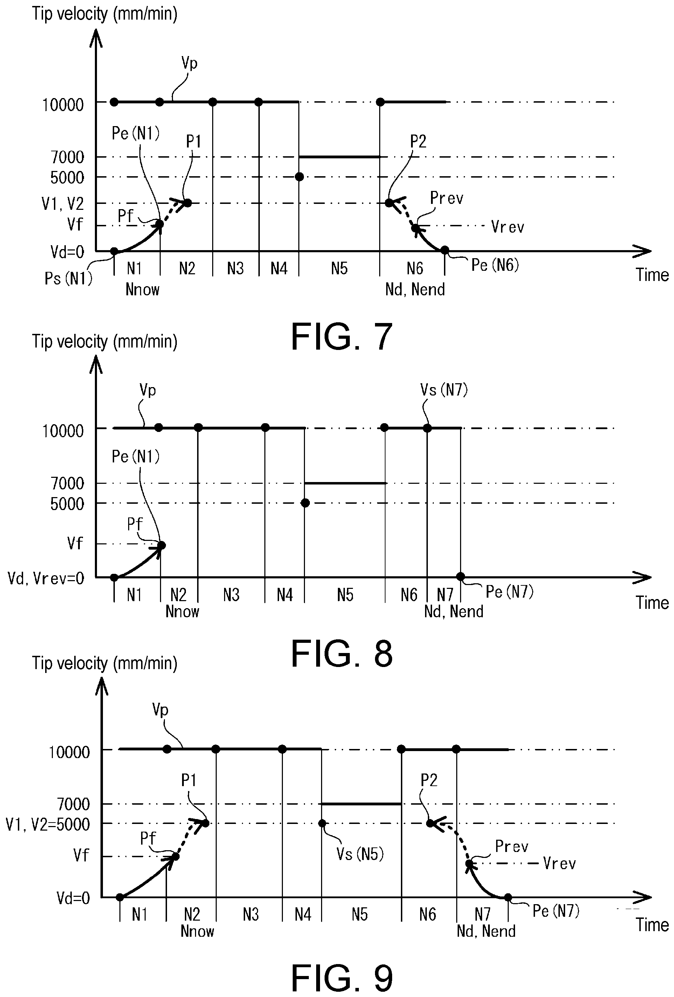

As shown in FIG. 7, when the acceleration by the first velocity control process is repeated, the current position Pf reaches the end point Pe (N1). This completes the acceleration/deceleration process (acceleration by the first velocity control process) of the block N1. In this case, the current block Nnow transitions from the block N1 to the block N2. In other words, the block N2 switches from a look-ahead block to the current block Nnow.

As shown in FIG. 8, the CPU 41 reads the block N7 as the look-ahead block, so that the number of look-ahead blocks becomes the look-ahead upper4 limit (5). As a result, the look-ahead end point block Nend transitions from the block N6 to the block N7. The CPU 41 calculates the tip movement amount (N7), the start point velocity (N7), and the command feed velocity (N7), and stores the calculated tip movement amount, start point velocity, and command feed velocity in association with the block N7 in the block information storage area 431 shown in FIG. 4. The CPU 41 newly sets the block N7 as the target block Nd in place of the block N6. Consequently, the target velocity Vd at the end point Pe (N7) becomes "0 mm/min".

As shown in FIG. 9, when the acceleration by the first velocity control process and the reverse interpolation are repeated, there may be cases where the second rise velocity V2 reaches 5000 mm/min. In this case, since the start point velocity Vs(N5) is 5000 mm/min, the second rise velocity V2 becomes the same as the start point velocity Vs(N5). A transition block is defined. The transition block is one or multiple blocks where the start point velocity Vs becomes equal to or less than the second rise velocity V2 among the look-ahead blocks in the processing order between a block one block after the current block Nnow and the arrival block, .

The arrival block is the block to which the second rise point P2 belongs among the look-ahead blocks. In FIG. 9, the block N6 becomes the arrival block. The block N5 is a look-ahead block in the processing order between the block N3, which is one block after the block N2 in the processing order, and block N6. The start point velocity Vs(N5) is equal to or less than the second rise velocity V2. Therefore, the block N5 becomes a transition block. For the transition block, the block with the lowest start point velocity Vs is referred to as the "transition target block". Since there is only one transition block, which is the block N5, the block N5 becomes the transition target block. Furthermore, in the case where there are multiple transition blocks with the lowest start point velocity Vs, the transition target block becomes the initial block in the processing order among the multiple transition blocks with the lowest start point velocity Vs.

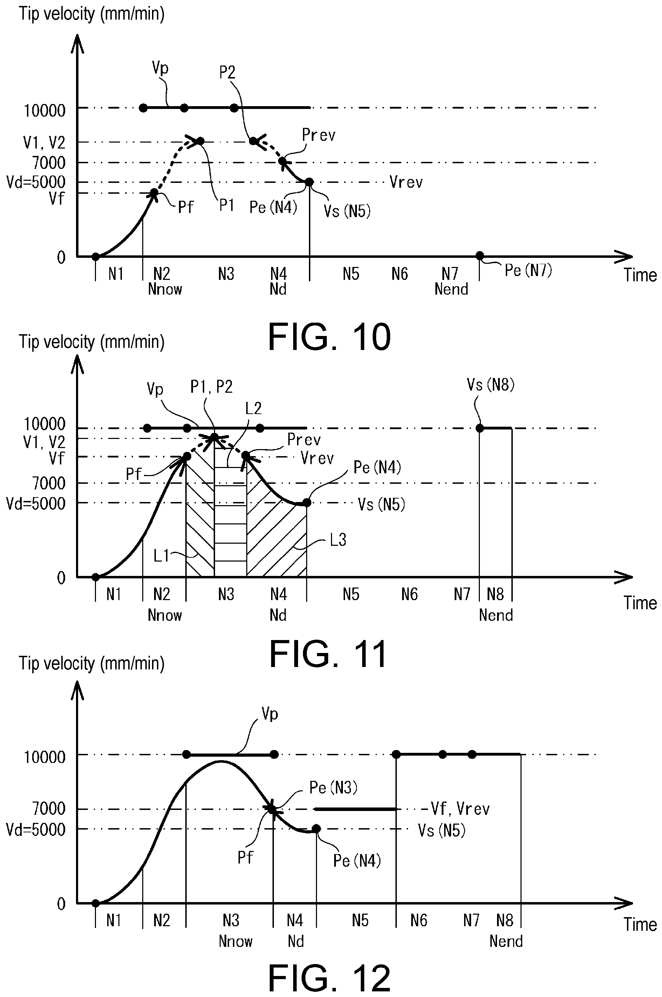

As shown in FIG. 10, the CPU 41 sets the block N4, which is one block before the transition target block in the processing order, as the target block Nd. The CPU 41 sets the target velocity Vd at the end point Pe (N4) to "5000 mm/min", which is the start point velocity Vs(N5). The CPU 41 repeats the acceleration by the first velocity control process.

As shown in FIG. 11, when the acceleration by the first velocity control process of the block N2 is completed, the current block Nnow transitions from the block N2 to the block N3, and the CPU 41 reads the block N8 as a look-ahead block. As a result, the look-ahead end point block Nend transitions from the block N7 to the block N8. The CPU 41 calculates the tip movement amount (N8), the start point velocity (N8), and the command feed velocity (N8), and stores the calculated tip movement amount, start point velocity, and command feed velocity in association with the block N8 in the block information storage area 431 shown in FIG. 4.

When the acceleration by the first velocity control process and the reverse interpolation are repeated, the total distance of the tip movement amount L1, the tip movement amount L2, and the tip movement amount L3 becomes equal to or greater than the remaining movement. In this case, the CPU 41 performs deceleration by the second velocity control process. As a result, the tip acceleration decreases. The target velocity Vd is 5000 mm/min. Therefore, in the second velocity control process, at each interpolation point, the tip velocity is controlled so that a fall velocity V3, which will be described later, does not become less than the target velocity Vd (5000 mm/min).

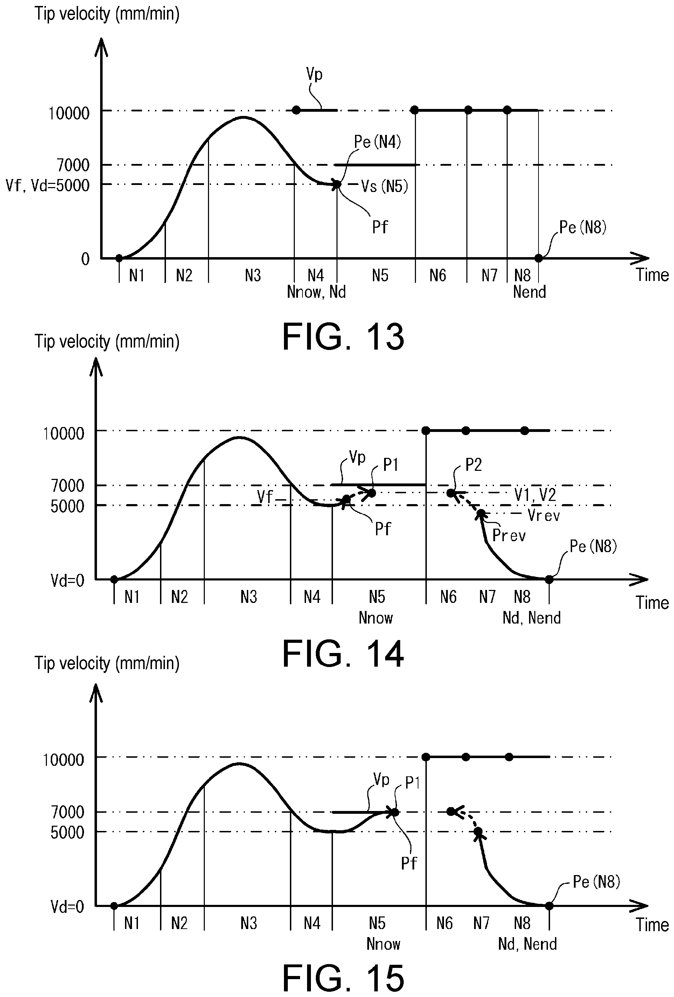

As shown in FIG. 12, when the deceleration by the second velocity control process is repeated, the current position Pf reaches the end point Pe (N3). In this case, since the block N8 is the final block, the block N9 is not read. As shown in FIG. 13, when the deceleration by the second velocity control process is further repeated, the current position Pf reaches the end point Pe (N4) of the target block Nd. As a result, at the end point Pe (N4) of the target block Nd, the current tip velocity Vf becomes the target velocity Vd (5000 mm/min). Therefore, the acceleration/deceleration process to the target block Nd, which is the block N4, is completed.

As shown in FIG. 14, the CPU 41 sets the target block Nd to the block N8, which is the look-ahead end point block Nend. The CPU 41 sets the target velocity Vd at the end point Pe (N8) of the target block Nd to 0 mm/min. The CPU 41 repeats the reverse interpolation and the acceleration/deceleration process. In FIG. 14, the total distance of the tip movement amount L1, the tip movement amount L2, and the tip movement amount L3 is less than the remaining movement. In this case, the CPU 41 performs acceleration by the first velocity control process and accelerates the tool tip.

As shown in FIG. 15, the velocity limit Vp at each interpolation point on the way through the block N5 is 7000 mm/min. Therefore, in the acceleration by the first velocity control process, at each interpolation point up on the way through the block N5, the tip velocity is controlled so that the first rise velocity V1 does not exceed the velocity limit Vp (7000 mm/min) at the first rise point P1. In other words, in the first velocity control process, when the tip velocity is accelerated and reaches the velocity limit Vp (7000 mm/min), until the velocity limit Vp changes from 7000 mm/min, the tip velocity is then controlled at the velocity limit Vp.

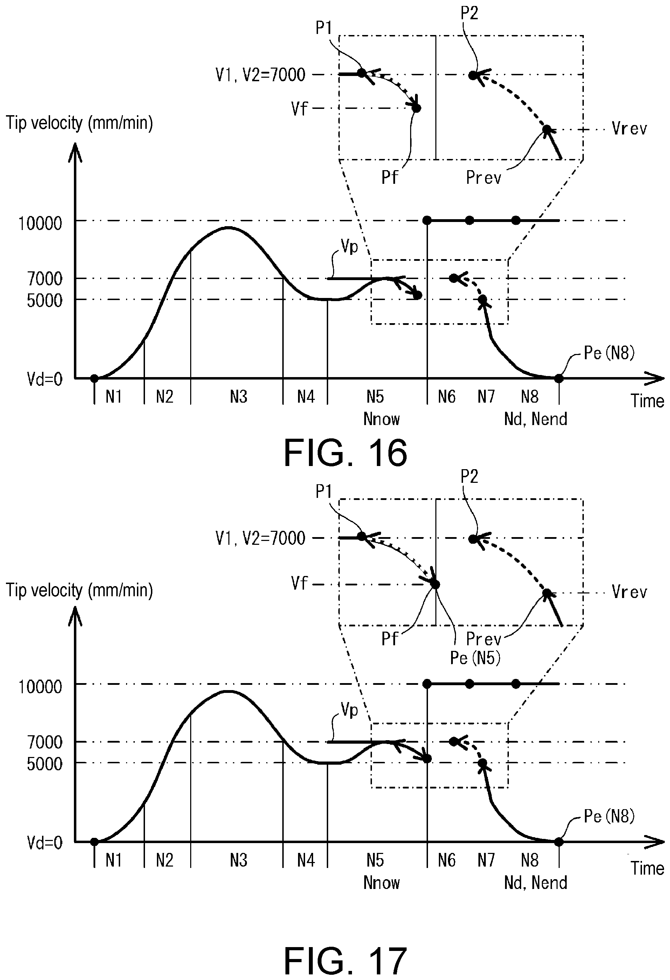

As shown in FIG. 16, on the way through the block N5, the velocity limit Vp at each interpolation point gradually decreases from 7000 mm/min. Since the command feed velocity (N5) is constant at 7000 mm/min, "the velocity limit Vp at each interpolation point gradually decreases on the way through the block N5" means that on the way through the block N5, the allowable passing velocity at each interpolation point gradually decreases to become less than 7000 mm/min. In this case, the CPU 41 performs deceleration by the first velocity control process.

Furthermore, the CPU 41 calculates the first rise velocity V1 (reverse). The calculated first rise velocity V1 is equal to the tip velocity at the time point when the deceleration by the first velocity control process starts. In other words, the second rise velocity V2 is already equal to the first rise velocity V1 (reverse). Therefore, the CPU 41 does not update the reverse interpolation point Prev.

As shown in FIG. 17, when the deceleration by the first velocity control process is repeated, the current position Pf reaches the end point Pe (N5). As a result, the acceleration/deceleration process for the block N5 is completed.

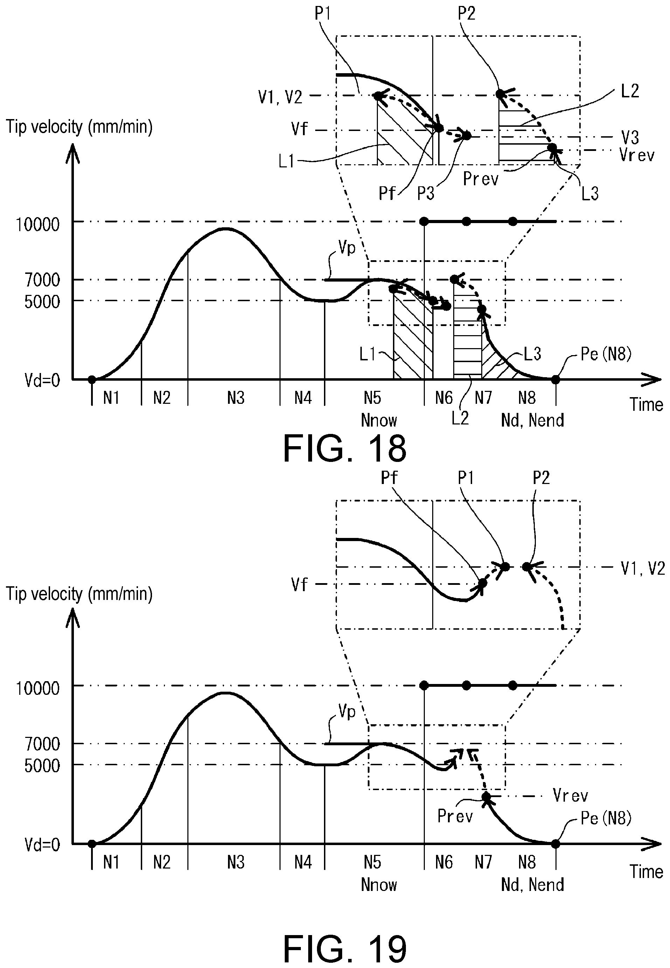

As shown in FIG. 18, when the deceleration by the first velocity control process is repeated and the current tip deceleration becomes equal to the maximum tip deceleration, the CPU 41 performs the reverse interpolation rewind in the forward direction from the reverse interpolation point Prev while performing deceleration by the first velocity control process. Specifically, the first rise velocity V1 (reverse) becomes lower than the tip velocity at the time point when the deceleration by the first velocity control process is started. The reason is that in the case where the first rise velocity V1 (reverse) is calculated by adding velocity to the current tip velocity Vf, the velocity change in the interval where the tip deceleration is equal to the maximum tip deceleration is not added to the current tip velocity Vf. In other words, the first rise velocity V1 (reverse) becomes lower than the tip velocity at the time point when the deceleration by the first velocity control process is started, by the amount of velocity change in the interval where the tip deceleration is equal to the maximum tip deceleration.

In the reverse interpolation rewind, the CPU 41 retrieves one by one in the forward direction from the calculated reverse interpolation points Prev. The CPU 41 retrieves the second rise velocity V2 corresponding to the retrieved reverse interpolation point Prev from the calculated second rise velocities V2. As a result, the second rise velocity V2 decreases. The CPU 41 may also calculate again the reverse interpolation point Prev and the second rise velocity V2. The CPU 41 repeats the reverse interpolation rewind to the maximum extent within the range where the second rise velocity V2 does not become less than the first rise velocity V1. However, in the case where the reverse interpolation point Prev becomes the end point Pe of the target block Nd, the CPU 41 terminates the repetition of the reverse interpolation rewind.

In FIG. 18, since the first rise point P1 (reverse direction) is positioned in the reverse direction relative to the current position Pf, the tip movement amount L1 becomes a negative value. For example, the total distance of the tip movement amount L1, the tip movement amount L2, and the tip movement amount L3 is less than the remaining movement. Therefore, the deceleration by the first velocity control process is performed.

A fall point P3 is defined as one of the interpolation points. The fall point P3, on the tip path, is a position that is in the forward direction from the current position Pf and where the tip deceleration becomes the second predetermined deceleration from the current tip deceleration. The second predetermined deceleration is not limited to a specific value, but a value that can be considered substantially 0 m/s^2 is preferable, and in the embodiment, the second predetermined acceleration is 0 m/s^2. Furthermore, the tip velocity at the fall point P3 is referred to as "fall velocity V3". In the first velocity control process, the tip velocity is controlled so that the fall velocity V3 does not exceed the velocity limit Vp at the fall point P3. For the description that also allows negative acceleration, the first rise point P1 (forward) in the case of negative acceleration actually means the fall point P3, and the first rise velocity V1 means the fall velocity V3. The same description will not be repeated in the following.

As shown in FIG. 19, when switching from deceleration to acceleration by the first velocity control process, the CPU 41 switches to calculate the first rise velocity V1 from the fall velocity V3 shown in FIG. 18. The velocity limit Vp at each interpolation point of the block N6 is 10000 mm/min. In the first velocity control process, the CPU 41 accelerates again the tool tip so that the calculated first rise velocity V1 does not exceed the velocity limit Vp (10000 mm/min) at the first rise point P1.

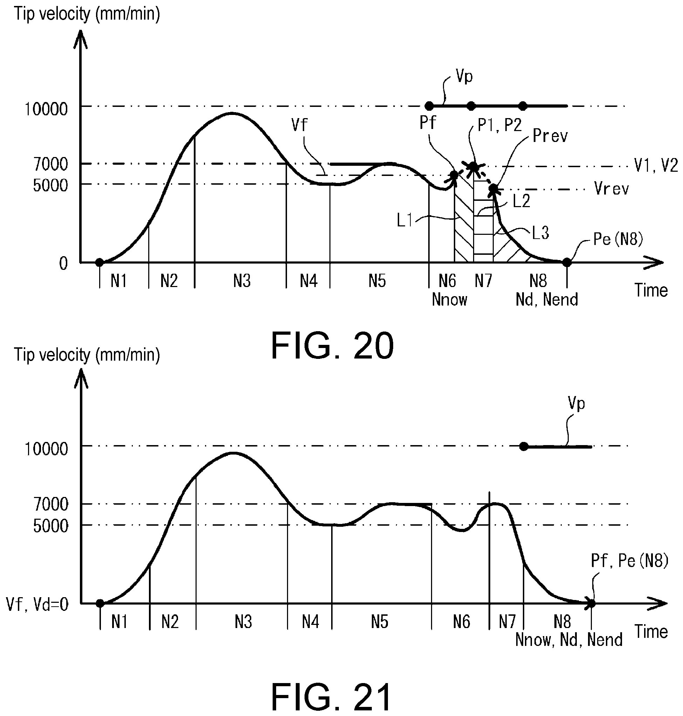

As shown in FIG. 20, when the acceleration by the first velocity control process is repeated, the total distance of the tip movement amount L1, the tip movement amount L2, and the tip movement amount L3 becomes equal to or greater than the remaining movement. In this case, deceleration by the second velocity transition process is performed.

As shown in FIG. 21, by repeatedly performing deceleration through the second velocity control process, the current position Pf becomes the end point Pe (N8), and the tip velocity at the end point Pe (N8) becomes the target velocity Vd (0 mm/min). Accordingly, the acceleration/deceleration process to the final block N8 is completed. Thus, the tip point control based on the NC program 441 shown in FIG. 3 is completed.

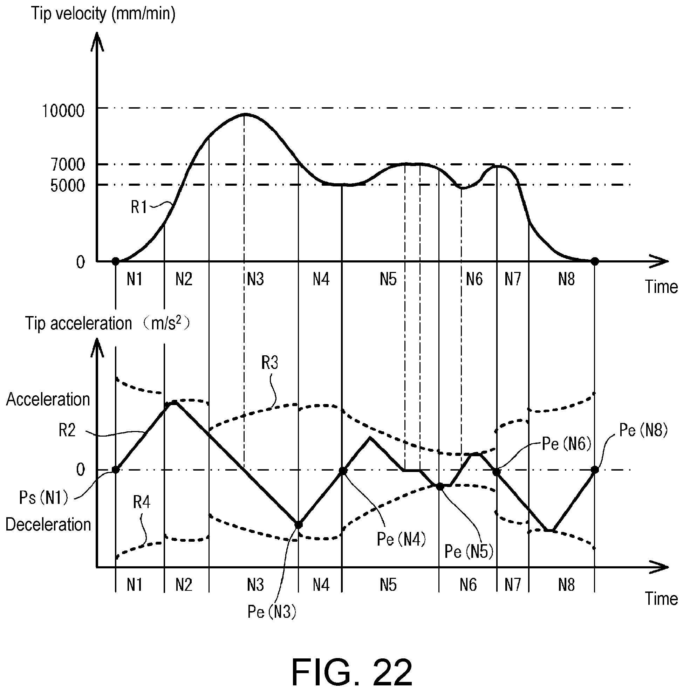

Referring to FIG. 22, the temporal change in tip acceleration in the case where the CPU 41 performs tip point control based on the NC program 441 shown in FIG. 3 is described. In the description of FIG. 22, the negative acceleration (deceleration) may also be simply referred to as acceleration. In FIG. 22, the upper graph shows the velocity curve of the tool tip with a solid line R1, the lower graph shows the acceleration curve of the tool tip with a solid line R2, the maximum tip acceleration is shown with a broken line R3, and the maximum tip deceleration is shown with a broken line R4. "Curve" is a concept that also includes a straight line. The tip acceleration is 0 m/s^2 at Ps (N1). The tip acceleration increases from Ps (N1) and reaches the maximum tip acceleration on the way through the block N2. After that, the tip acceleration decreases and reaches 0 m/s^2 on the way through the block N3. The tip velocity is 0 mm/min at Ps (N1). The tip velocity increases from Ps (N1) and peaks at the time point when the tip acceleration reaches 0 m/s^2 on the way through the block N3.

The tip acceleration further decreases from the time point of reaching 0 m/s^2 on the way through the block N3, and switches to increasing from the end point Pe (N3). Subsequently, the tip acceleration reaches 0 m/s^2 at the end point Pe (N4). The tip velocity decreases from the peak on the way through the block N3 and reaches 5000 mm/min at the end point Pe (N4). The tip velocity peaks at the end point Pe (N4) at the time point when the tip acceleration reaches 0 m/s^2. As mentioned above, the block N4 is the target block Nd.

The tip acceleration further increases from the end point Pe (N4) and switches to decreasing in on the way through the block N5. Subsequently, the tip acceleration reaches 0 m/s^2 on the way through the block N5 and is maintained at 0 m/s^2. The tip velocity, after reaching 5000 mm/min, increases to 7000 mm/min. The tip velocity is maintained at 7000 mm/min (velocity limit Vp) while the tip acceleration is maintained at 0 m/s^2.

After being maintained at 0 m/s^2, the tip acceleration decreases and reaches the maximum tip deceleration immediately before the end point Pe (N5). The tip acceleration is maintained at the maximum tip deceleration and starts to increase on the way through the block N6. Subsequently, the tip acceleration reaches 0 m/s^2 on the way through the block N6. The tip velocity, after being maintained at 7000 mm/min (velocity limit Vp), decreases in accordance with the decrease of the velocity limit Vp. Then, the tip velocity peaks on the way through the block N6 at the time point when the tip acceleration reaches 0 mm/min.

The tip acceleration, after reaching 0 m/s^2 on the way through the block N6, continues to increase. The tip acceleration reaches the maximum tip acceleration on the way through the block N6 and is maintained at the maximum tip acceleration. The tip acceleration, after being maintained at the maximum tip acceleration, decreases and reaches 0 m/s^2 at the end point Pe (N6). The tip velocity increases from the peak on the way through block N6 and peaks at the time point when the tip acceleration reaches 0 m/s^2 at the end point Pe (N6).

The tip acceleration further decreases from the end point Pe (N6) and reaches the maximum tip deceleration on the way through the block N8. The tip acceleration, after being maintained at the maximum tip deceleration, increases. The tip acceleration reaches 0 m/s^2 at the end point Pe (N8). The tip velocity decreases from the peak at the end point Pe (N6). The tip velocity reaches 0 mm/min at the end point Pe (N8) at the time point when the tip acceleration reaches 0 m/s^2.

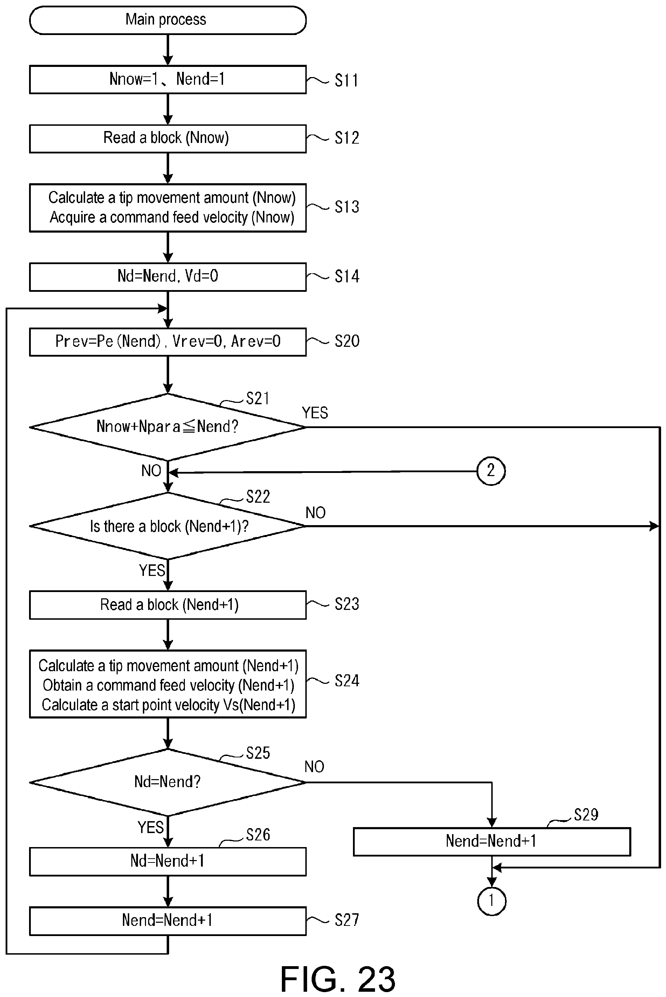

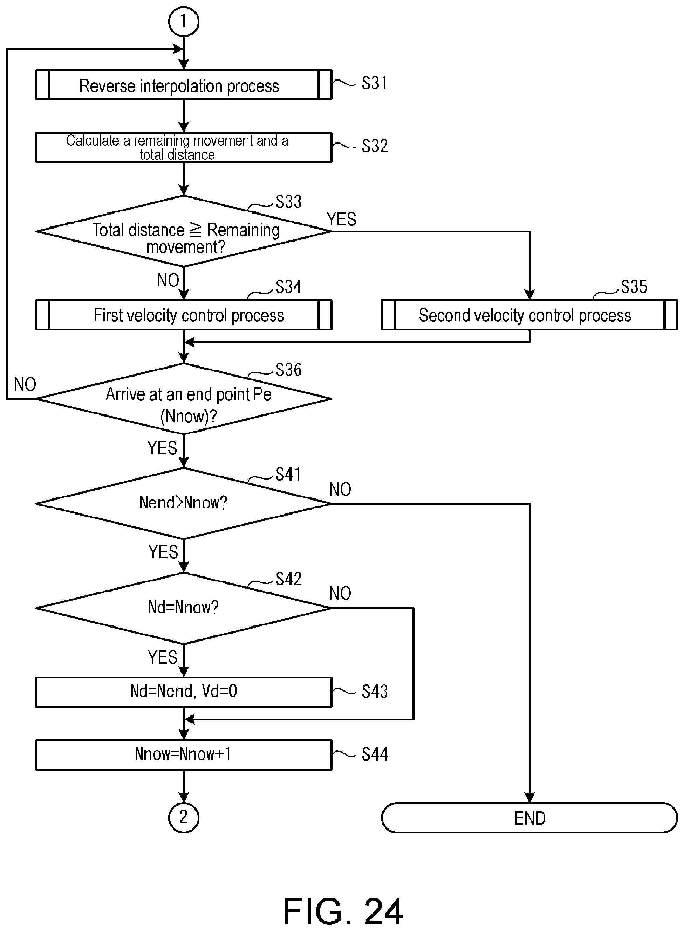

Referring to FIG. 23 and FIG. 24, the main process is described. To realize the tool tip control, the CPU 41 performs the main process. The user specifies the NC program of the control target and inputs a start instruction for initiating the control based on the specified NC program to the numerical control device 40 through the operational part 17. In the case of detecting the start instruction through the operational part 17, the CPU 41 initiates the main process by executing the control program stored in the flash memory 44. In the main process, the CPU 41 appropriately stores in the RAM 43 each calculated and set value, the current tip velocity, the tip acceleration, etc. In the following, examples are given as appropriate for cases where the CPU 41 performs tool tip control based on the NC program 441 shown in FIG. 3.

As shown in FIG. 23, when the main process starts, the CPU 41 sets "1" to the current block Nnow (S11). The CPU 41 sets "1" to the look-ahead end point block Nend (S11). The CPU 41 reads the current block Nnow from the NC program (S12). The CPU 41 calculates the tip movement amount (Nnow) based on the current position Pf and the command point (Nnow) (S13). The CPU 41 obtains the command feed velocity (Nnow) from the current block Nnow that is read (S13).

The CPU 41 sets the look-ahead end point block Nend to the target block Nd (S14). The CPU 41 sets "0 mm/min" to the target velocity Vd (S14). The CPU 41 sets the end point Pe (Nend) to the reverse interpolation point Prev (S20). The CPU 41 sets "0 mm/min" to the reverse interpolation velocity Vrev (S20). The reverse interpolation velocity Vrev is the tip velocity at the reverse interpolation point Prev. The CPU 41 sets "0 m/s^2" to the reverse interpolation acceleration Arev (S20). The reverse interpolation acceleration Arev is the tip acceleration at the reverse interpolation point Prev.

The CPU 41 determines whether Nend is greater than or equal to the total of Nnow and Npara (S21). Npara indicates the look-ahead upper limit. In the case where the number of look-ahead blocks is less than the look-ahead upper limit Npara, Nend is smaller than the total of Nnow and Npara (S21: NO). In this case, the CPU 41 determines if a block Nend+1 is present in the NC program (S22).

In the case where the look-ahead end point block Nend is not the final block, the block Nend+1 is present in the NC program (S22: YES). In this case, the CPU 41 reads the block Nend+1 from the NC program (S23). The CPU 41 calculates the tip movement amount (Nend+1) based on the command point (Nend) and the command point (Nend+1) (S24). The CPU 41 obtains the command feed velocity (Nend+1) from the read block Nend+1 (S24).

The CPU 41 calculates the start point velocity Vs (Nend+1) (S24). Specifically, the CPU 41 calculates the first connection velocity (Nend+1) based on the axis velocity of each drive axis assuming the tip velocity at the end point Pe (Nend) is a predetermined tip velocity, the axis velocity of each drive axis assuming the tip velocity at the start point Ps (Nend+1) is a predetermined tip velocity, and the maximum axis velocity difference of each drive axis. The CPU 41 calculates the second connection velocity (Nend+1) based on the axis acceleration of each drive axis in the case of assuming the tip velocity and the tip acceleration at the end point Pe (Nend) are a predetermined tip velocity and 0 m/s^2 respectively, the axis acceleration of each drive axis in the case of assuming the tip velocity and the tip acceleration at the start point Ps(Nend+1) are a predetermined tip acceleration and 0 m/s^2 respectively, the maximum axis acceleration of each drive axis, and the maximum tip jerk. The CPU 41 calculates the connection velocity (Nend+1) as the minimum value between the first connection velocity (Nend+1) and the second connection velocity (Nend+1). In the case where no command feed velocity is commanded by the block Nend+1, the CPU 41 sets the calculated connection velocity as the start point velocity Vs (Nend+1). In the case where a command feed velocity is commanded by the block Nend+1, the CPU 41 calculates the start point velocity Vs (Nend+1) as the minimum value between the calculated connection velocity (Nend+1) and the command feed velocity (Nend+1).

The CPU 41 determines whether the target block Nd is the look-ahead end point block Nend (S25). In the case where the CPU 41 does not set the block Ntmp-1 as the target block Nd in S72 in the reverse interpolation process (S31) to be described later, the target block Nd becomes the look-ahead end point block Nend (S25: YES). In this case, the CPU 41 sets the block Nend+1 as the target block Nd (S26). The CPU 41 sets block Nend+1 as the look-ahead end point block Nend (S27). The CPU 41 returns the process to S20.

By repeating S27, the CPU 41 increases the look-ahead end point block Nend by "1" each time. In the case where the number of the look-ahead blocks becomes equal to or greater than the look-ahead upper limit Npara, Nend becomes equal to or greater than Nnow+Npara in S21 (S21: YES). In this case, the CPU 41 transitions the process to S31 shown in FIG. 24.

In the block information storage area 431 shown in FIG. 4, by performing S13, the calculated values are respectively stored in each area corresponding to the block N1. By repeating S20 to S28, the calculated values are respectively stored in each area corresponding to the blocks N2 to N6 in the order of the blocks N2, N3, N4, N5, and N6.

As shown in FIG. 24, the CPU 41 performs the reverse interpolation process (S31). In the reverse interpolation process, the CPU 41 calculates the reverse interpolation point Prev, the first rise velocity V1, the second rise velocity V2, the arrival block, and the transition block.

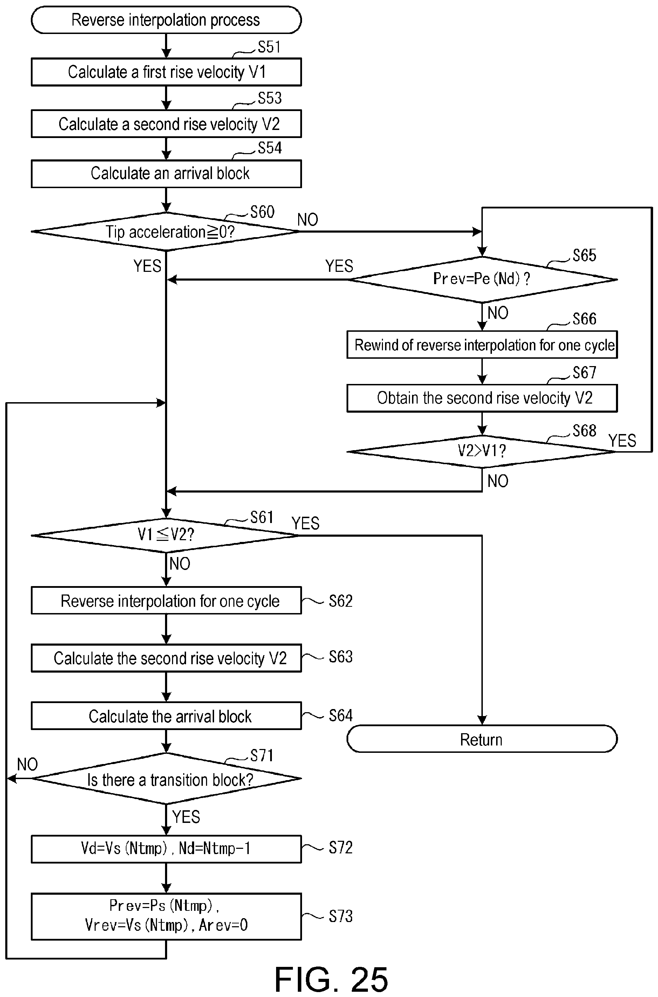

Referring to FIG. 25, the details of the reverse interpolation process are described. When the reverse interpolation process starts, the CPU 41 calculates the first rise velocity V1 based on the maximum tip jerk, the current tip velocity Vf, and the current tip acceleration or the current tip deceleration (S51). Specifically, in the case where the current tip acceleration is a positive value, the CPU 41 calculates, as the first rise velocity V1 (forward direction), the tip velocity increased from the current tip velocity Vf in the case where the current tip acceleration is reduced to 0 m/s^2 by using the maximum tip jerk. In the case where the current tip acceleration is a negative value (i.e., tip deceleration), the CPU 41 calculates, as the first rise velocity V1 (reverse direction), the tip velocity increased from the current tip velocity Vf in the case where the current tip deceleration is reduced to 0 m/s^2 by using the maximum tip jerk.

The CPU 41 calculates the second rise velocity V2 based on the maximum tip jerk, the reverse interpolation velocity Vrev, and the reverse interpolation acceleration Arev (S53). Specifically, the CPU 41 calculates, as the second rise velocity V2, the tip velocity increased from the reverse interpolation velocity Vrev in the case where the reverse interpolation acceleration Arev is reduced to 0 m/s^2 by using the maximum tip jerk.

Furthermore, the CPU 41 calculates the arrival block (S54). The CPU 41 calculates the tip movement amount from the second rise point P2 to the reverse interpolation point Prev based on the reverse interpolation velocity Vrev, the reverse interpolation acceleration Arev, and the maximum tip jerk. The CPU 41 calculates the arrival block based on the calculated tip movement amount and the tip movement amount of each block.

The CPU 41 determines whether the current tip acceleration is equal to or greater than 0 m/s^2 (S60). For example, immediately after the acceleration is started due to the first control process, etc., the current tip acceleration becomes equal to or greater than 0 m/s^2 (S60: YES). In this case, the CPU 41 determines whether the second rise velocity V2 is equal to or greater than the first rise velocity V1 (S61). In the case where the second rise velocity V2 is equal to or greater than the first rise velocity V1 (S61: YES), the CPU 41 returns the process to the main process shown in FIG. 24.

In the case where the second rise velocity V2 is less than the first rise velocity V1 (S61: NO), the CPU 41 performs reverse interpolation for one cycle (S62). Specifically, the CPU 41 calculates the maximum tip acceleration at the reverse interpolation point Prev based on the reverse interpolation velocity Vrev and the maximum axis acceleration. The CPU 41 calculates, as the reverse interpolation point Prev, the position moved for one cycle from the reverse interpolation point Prev toward the current block Nnow on the tip path at the maximum tip velocity based on the reverse interpolation velocity Vrev, the reverse interpolation acceleration Arev, the calculated maximum tip acceleration, and the maximum tip jerk stored in the flash memory 44. The CPU 41 transitions the process to S63.

For example, after the acceleration due to the first control process starts, in the case where the first rise velocity V1 reaches the velocity limit Vp at the first rise point P1 and then the velocity limit Vp decreases, the current tip acceleration becomes less than 0 m/s^2 (S60: NO). In this case, the CPU 41 determines whether the reverse interpolation point Prev is the end point Pe of the target block Nd (S65).

In the case where the reverse interpolation point Prev is not the end point Pe of the target block Nd (S65: NO), the CPU 41 performs the reverse interpolation rewind for one cycle (S66). Specifically, the CPU 41 retrieves the reverse interpolation point Prev of one cycle earlier from the RAM 43. The CPU 41 retrieves the second rise velocity V2 corresponding to the reverse interpolation point Prev of one cycle earlier, i.e., the second rise velocity V2 of one cycle earlier, from the RAM 43 (S67).

The CPU 41 determines whether the second rise velocity V2 of one cycle earlier retrieved in S67 is greater than the first rise velocity V1 calculated in S51 (S68). In the case where the second rise velocity V2 is greater than the first rise velocity V1 (S68: YES), the CPU 41 returns the process to S65. In other words, the CPU 41 repeats S66 and S67 until the second rise velocity V2 becomes equal to or less than the first rise velocity V1, or until the reverse interpolation point Prev becomes the end point Pe of the target block Nd. In the case where S66 and S67 are repeated, the CPU 41 retrieves the reverse interpolation point Prev or the second rise velocity V2 from one cycle before the previously retrieved reverse interpolation point Prev or second rise velocity V2 in S66 and S67. In the case where the second rise velocity V2 becomes equal to or less than the first rise velocity (S68: NO), or in the case where the reverse interpolation point Prev becomes the end point Pe of the target block Nd (S65: YES), the CPU 41 transitions the process to S61.

For example, in S61, in the case where the second rise velocity V2 calculated in S53 is equal to or greater than the first rise velocity V1 calculated in S51, the CPU 41 does not perform reverse interpolation (S62). In other words, in the embodiment, it may also be that the CPU 41 does not perform reverse interpolation (S62) even after calculating the first rise velocity V1 once.

The first rise velocity V1 is fixed to the value calculated in S51. The second rise velocity V2 is periodically calculated in S63 as described later, and in the case where the reverse interpolation is performed, the second rise velocity V2 increases each time it is calculated. For example, with the CPU 41 calculating the second rise velocity V2 once or multiple times in S63, the second rise velocity V2 may become equal to or greater than the first rise velocity V1 in S61. In other words, in the embodiment, the CPU 41 may perform the reverse interpolation (S62) once or multiple times every time when the first rise velocity V1 is calculated once.

The first rise velocity V1 is fixed to the value calculated in S51. The second rise velocity V2 is periodically calculated in S63 as described later, and in the case where the reverse interpolation rewind is performed, the second rise velocity V2 decreases every time when calculated. For example, with the CPU 41 calculating the second rise velocity V2 once or multiple times in S63, the first rise velocity V1 may become equal to or greater than the second rise velocity V2 in S68. In other words, in the embodiment, the CPU 41 may perform the reverse interpolation rewind (S66) once or multiple times every time when the first rise velocity V1 is calculated once.

The CPU 41 calculates the second rise velocity V2 based on the reverse interpolation point Prev calculated in S62 (S63). The reverse interpolation acceleration Arev based on the reverse interpolation point Prev calculated in S62 does not become smaller than the tip acceleration that is reduced by the unit maximum tip jerk from the reverse interpolation acceleration Arev based on the reverse interpolation point Prev at the time point of S53 or the previous S63. Therefore, in the case where reverse interpolation (S62) is performed, the second rise velocity V2 calculated in S63 becomes equal to or greater than the second rise velocity V2 calculated in S53 or the previous S63. The reverse interpolation velocity Vrev based on the reverse interpolation point Prev obtained in S66 becomes lower than the reverse interpolation velocity Vrev based on the reverse interpolation point Prev at the time point of S53 or the previous S63. Therefore, in the case where reverse interpolation rewind (S66) is performed, the second rise velocity V2 calculated in S63 becomes lower than the second rise velocity V2 calculated in S53 or the previous S63.

Furthermore, the CPU 41 calculates the arrival block based on the reverse interpolation velocity Vrev calculated in S62, the reverse interpolation acceleration Arev calculated in S62, and the maximum tip jerk stored in the flash memory 44 (S64). The CPU 41 determines whether there is a transition block among the look-ahead blocks based on the current block and the arrival block, and the second rise velocity V2 and the respective start point velocities Vs of the look-ahead blocks (S71). In the case where there is no transition block (S71: NO), the CPU 41 returns the process to S61.

In the case where there is a transition block (S71: YES), the CPU 41 sets the start point velocity Vs(Ntmp) as the target velocity Vd (S72). Here, Ntmp indicates the block number of the transition target block. The CPU 41 sets the block Ntmp-1 as the target block Nd (S72). For example, in the case where the block N5 is the transition target block Ntmp, the block N4 becomes the target block Nd (see FIG. 10).

The CPU 41 sets the start point Ps (Ntmp) as the reverse interpolation point Prev (S73). The CPU 41 sets the start point velocity Vs (Ntmp) as the reverse interpolation velocity Vrev (S73). The CPU 41 sets "0 m/s^2" as the reverse interpolation acceleration Arev (S73). The CPU 41 returns the process to S61.

Returning to the description of FIG. 24, after the reverse interpolation process, the CPU 41 calculates the total distance of the tip movement amount L1, the tip movement amount L2, and the tip movement amount L3, and the remaining movement (S32). The CPU 41 calculates the total distance of the tip movement amount L1, the tip movement amount L2, and the tip movement amount L3 based on the positions of the current position Pf, the first rise point P1, the second rise point P2, and the end point Pe of the target block Nd on the tip path. The CPU 41 calculates the remaining movement based on the current position Pf and the tip movement amount of each block calculated in S13 and S17 shown in FIG. 23.

The CPU 41 determines whether the total distance calculated in S32 is equal to or greater than the remaining movement calculated in S32 (S33). For example, as shown in FIG. 6 or FIG. 20, in the case where the total distance is less than the remaining movement (S34: NO), the CPU 41 can decelerate the tip velocity to the target velocity Vd at the end point Pe of the target block Nd even if the second velocity control process along the velocity curve of the tool tip from the end point Pe of the target block Nd to the second rise point P2 is not performed. Therefore, the CPU 41 performs the first velocity control process (S34). In the first velocity control process, the CPU 41 controls (accelerates, decelerates, or maintains) the tip velocity at the tip acceleration based on the maximum tip acceleration and the maximum tip jerk so that the first rise velocity V1 does not exceed the velocity limit Vp at the first rise point P1.

When the first velocity control process is repeated, the total distance increases while the remaining movement decreases. For example, as shown in FIG. 11, in the case where the total distance becomes equal to or greater than the remaining movement (S34: YES), there is a possibility that the CPU 41 cannot decelerate the tip velocity to the target velocity Vd at the end point Pe of the target block Nd if the second velocity control process along the velocity curve of the tool tip from the end point Pe of the target block Nd to the second rise point P2 is not performed. Therefore, the CPU 41 performs the second velocity control process (S35). In the second velocity control process, the CPU 41 controls (accelerates, decelerates, or maintains) the tip velocity at the tip deceleration based on the maximum tip deceleration and the maximum tip jerk so that the first rise velocity V1 does not become less than the target velocity Vd.

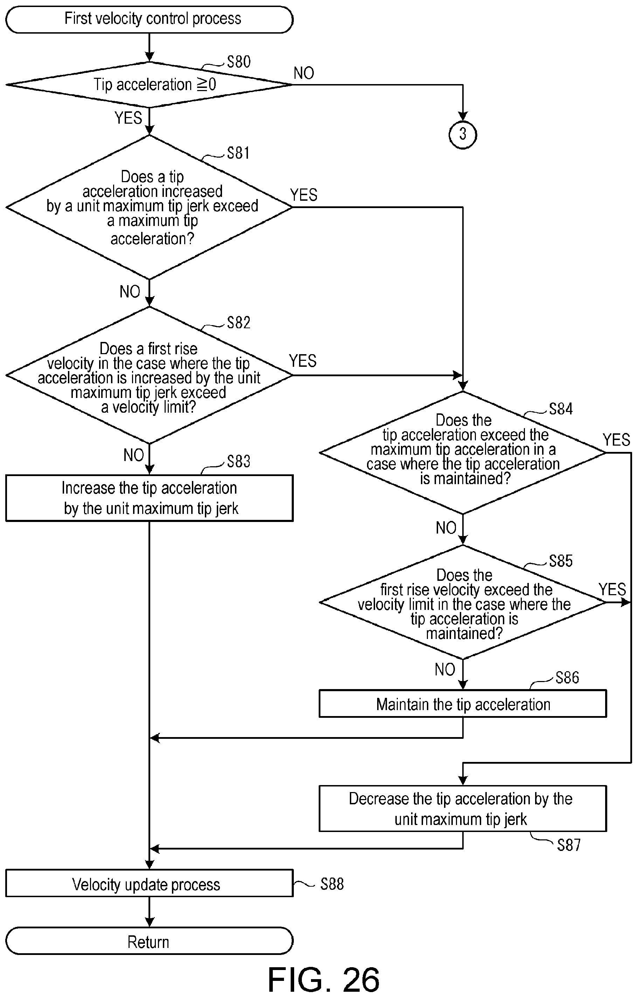

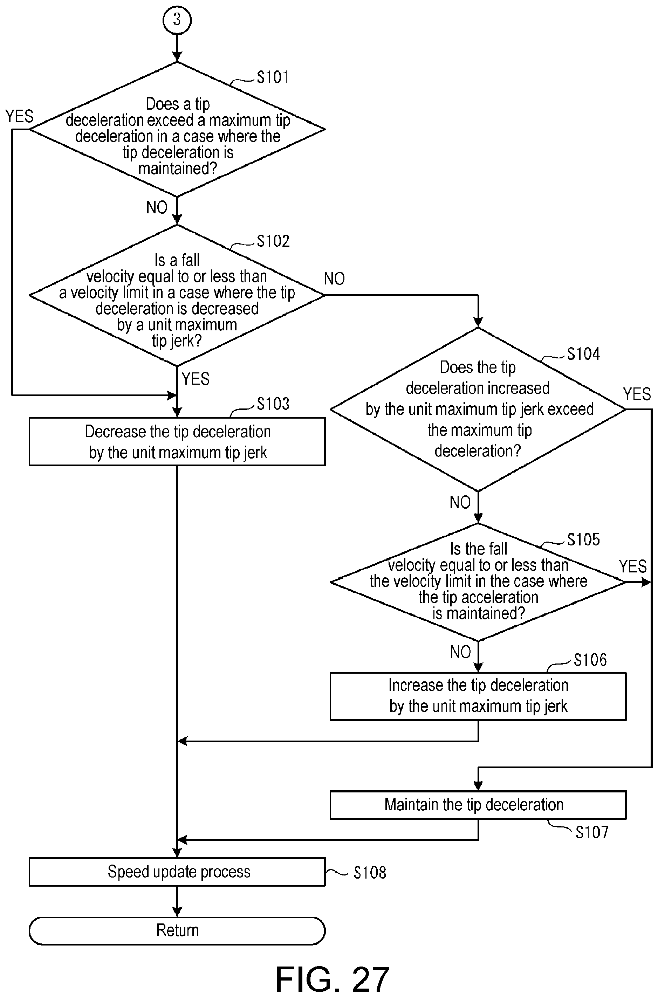

Referring to FIG. 26 and FIG. 27, the details of the first velocity control process are described. In the first velocity control process, the CPU 41 performs different processes depending on whether the tool tip is accelerating. As shown in FIG. 26, when the first velocity control process starts, the CPU 41 determines whether the current tip acceleration is equal to or greater than 0 m/s^2 (S80).

First, the process in the case where the current tip acceleration is equal to or greater than 0 m/s^2 (S80: YES), that is, in the case where the tool tip is accelerating is described. In this case, the CPU 41 determines whether the tip acceleration in the case where the current tip acceleration is increased by a unit maximum tip jerk exceeds the maximum tip acceleration (S81). In S81, the CPU 41 calculates the maximum tip acceleration at the first rise point P1 based on the first rise velocity V1 and the maximum axis acceleration. The CPU 41 calculates the tip acceleration in the case where the current tip acceleration is increased by a unit maximum tip jerk based on the maximum tip jerk stored in the flash memory 44. The CPU 41 makes the determination in S81 based on the calculated tip acceleration and the maximum tip acceleration.

For example, in the case where the current tip acceleration is relatively small, even if the CPU 41 increases the current tip acceleration by a unit maximum tip jerk, the increased tip acceleration does not exceed the maximum tip acceleration (S81: NO). In this case, the CPU 41 determines whether the first rise velocity V1 in the case where the current tip acceleration is increased by a unit maximum tip jerk exceeds the velocity limit Vp at the first rise point P1 (S82).

In S82, the CPU 41 calculates the allowable passing velocity at the first rise point P1 based on the maximum axis velocity and the maximum axis acceleration. In the case where no command feed velocity is commanded by the current block Nnow, the CPU 41 sets the calculated allowable passing velocity as the velocity limit Vp at the first rise point P1. In the case where the command feed velocity is commanded by the current block Nnow, the CPU 41 sets the lower one of the calculated allowable passing velocity and the command feed velocity (Nnow) as the velocity limit Vp at the first rise point P1. Furthermore, the CPU 41 calculates the first rise velocity V1 in the case where the current tip acceleration is increased by a unit maximum tip jerk based on the maximum tip jerk stored in the flash memory 44. The CPU 41 makes the determination in S82 based on the calculated first rise velocity V1 and the velocity limit Vp.

For example, in the case where the current tip velocity Vf is relatively low compared to the velocity limit Vp, even if the CPU 41 increases the current tip acceleration by a unit maximum tip jerk, the first rise velocity V1 does not exceed the velocity limit Vp(Nnow) at the first rise point P1 (S82: NO). In this case, the CPU 41 increases the current tip acceleration by a unit maximum tip jerk (S83). As a result, the tip velocity rapidly approaches the velocity limit Vp over time. The CPU 41 transitions the process to S88.

For example, in the case where the current tip acceleration is already close to the maximum tip acceleration, when the CPU 41 increases the current tip acceleration by a unit maximum tip jerk, the increased tip acceleration exceeds the maximum tip acceleration (S81: YES). Furthermore, for example, in the case where the current tip velocity Vf is already close to the velocity limit Vp at the first rise point P1 in the case where the current tip acceleration is increased by a unit maximum tip jerk, when the CPU 41 increases the current tip acceleration by a unit maximum tip jerk, the first rise velocity V1 exceeds the velocity limit Vp (S82: YES). In such case, the CPU 41 determines whether the maintained tip acceleration exceeds the maximum tip acceleration at the first rise point P1 if the current tip acceleration is maintained during the current cycle (S84). In S84, the CPU 41 calculates the maximum tip acceleration at the first rise point P1 in the same manner as in S81. The CPU 41 makes the determination in S84 based on the current tip acceleration and the calculated maximum tip acceleration.

In the case where the maximum tip acceleration is maintained or increased from the current position Pf to the first rise point P1, even if the CPU 41 maintains the current tip acceleration during the current cycle, the maintained tip acceleration does not exceed the maximum tip acceleration (S84: NO). In this case, the CPU 41 determines whether the first rise velocity V1 in the case where the current tip acceleration is maintained during the current cycle exceeds the velocity limit Vp (S85). In S85, the CPU 41 calculates the velocity limit Vp at the first rise point P1 in the case where the current tip acceleration is maintained, in the same manner as in S82. The CPU 41 calculates the first rise velocity V1 in the case where the current tip acceleration is maintained in the current cycle, based on the current tip velocity. The CPU 41 makes the determination in S85 based on the calculated velocity limit Vp and the first rise velocity V1.

For example, in the case where the current tip velocity Vf is relatively far from the velocity limit Vp at the first rise point P1 in the case where the current tip acceleration is maintained, even if the CPU 41 maintains the current tip acceleration during the current cycle, the first rise velocity V1 does not exceed the velocity limit Vp at the first rise point P1 (S85: NO). In this case, the CPU 41 maintains the current tip acceleration during the current cycle (S86). As a result, the tip velocity approaches the velocity limit Vp linearly over time. The CPU 41 transitions the process to S88.

With the maximum tip acceleration decreasing from the current maximum tip acceleration during the period from the current position Pf to the first rise point P1, the maintained tip acceleration may exceed the maximum tip acceleration during the current cycle (S84: YES). Furthermore, for example, in the case where the current tip velocity Vf is already close to the velocity limit Vp at the first rise point P1 in the case where the current tip acceleration is maintained, when the CPU 41 maintains the current tip acceleration during the current cycle, the first rise velocity V1 exceeds the velocity limit Vp at the first rise point P1 (S85: YES). In such case, the CPU 41 decreases the current tip acceleration by a unit maximum tip jerk (S87). As a result, the tip velocity approaches the velocity limit Vp gradually over time. The CPU 41 transitions the process to S88.

After S83, S86, or S87, the CPU 41 performs a velocity update process (S88). In the velocity update process of S88, the CPU 41 calculates the tip velocity by adding to the current tip velocity Vf the amount of velocity change for one cycle in the case of acceleration with the tip acceleration calculated in S83, S86, or S87. The CPU 41 outputs signals to each of the X-axis motor 61, the Y-axis motor 62, the Z-axis motor 63, the A-axis motor 64, and the C-axis motor 65 so that the actual tip velocity in the machine tool 1 becomes the calculated tip velocity, and controls each drive axis during the current cycle. As a result, the CPU 41 controls the tip point and tip velocity. The CPU 41 returns the process to the main process shown in FIG. 24.

In S80, the process in the case where the current tip acceleration is less than 0 m/s^2 (S80: NO), that is, in the case where the tool tip is decelerating is described. In this case, as shown in FIG. 27, the CPU 41 determines whether the maintained tip deceleration exceeds the maximum tip deceleration when the current tip deceleration is maintained during the current cycle (S101). In S101, the CPU 41 calculates the maximum tip deceleration at the fall point P3 based on the fall velocity V3 and the maximum axis acceleration. The CPU 41 makes the determination of S101 based on the current tip deceleration and the calculated maximum tip deceleration.

In the case where the maximum tip deceleration is maintained or increased from the current position Pf to the fall point P3, even if the CPU 41 maintains the current tip deceleration during the current cycle, the maintained tip deceleration does not exceed the maximum tip deceleration (S101: NO). In this case, the CPU 41 determines whether the fall velocity V3 in the case where the current tip deceleration is decreased by a unit maximum tip jerk becomes equal to or less than the velocity limit Vp at the fall point P3 (S102). In S102, the CPU 41 calculates, based on the current tip velocity Vf, the fall velocity V3 in the case where the current tip deceleration is increased by a unit maximum tip jerk. The CPU 41 calculates the velocity limit Vp at the fall point P3 in the same manner as in S82. The CPU 41 makes the determination of S102 based on the calculated fall velocity V3 and the velocity limit Vp.

For example, with the maximum tip deceleration decreasing to a level lower than the current maximum tip deceleration during the period from the current position Pf to the fall point P3, the maintained tip deceleration may exceed the maximum tip deceleration during the current cycle (S101: YES). Furthermore, for example, in the case where the current tip velocity Vf is already close to the velocity limit Vp at the fall point P3 in the case where the current tip deceleration is decreased by a unit maximum tip jerk, even if the CPU 41 decreases the current tip deceleration by a unit maximum tip jerk, the fall velocity V3 becomes equal to or less than the velocity limit Vp at the fall point P3 (S102: YES). In such case, the CPU 41 decreases the current tip deceleration by a unit maximum tip jerk (S103). As a result, the tip velocity approaches the velocity limit Vp gradually over time. The CPU 41 transitions the process to S108.

For example, in the case where the current tip velocity Vf is relatively larger than the velocity limit Vp at the fall point P3 in the case where the current tip deceleration is decreased by a unit maximum tip jerk, when the CPU 41 decreases the current tip deceleration by a unit maximum tip jerk, the fall velocity V3 does not become equal to or less than the velocity limit Vp at the fall point P3 (S102: NO). In this case, the CPU 41 determines whether the tip deceleration in the case where the current tip deceleration is increased by a unit maximum tip jerk exceeds the maximum tip deceleration (S104). In S104, the CPU 41 calculates the maximum tip deceleration at the fall point P3 in the same manner as in S101. The CPU 41 calculates the tip deceleration in the case where the current tip deceleration is increased by a unit maximum tip jerk based on the maximum tip jerk stored in the flash memory 44. The CPU 41 makes the determination of S104 based on the calculated tip deceleration and the maximum tip deceleration.

For example, in the case where the current tip deceleration is relatively small, even if the CPU 41 increases the current tip deceleration by a unit maximum tip jerk, the increased tip deceleration does not exceed the maximum tip deceleration (S104: NO). In this case, the CPU 41 determines whether the fall velocity V3 in the case where the current tip deceleration is maintained during the current cycle becomes equal to or less than the velocity limit Vp at the fall point P3 (S105). In S105, the CPU 41 calculates the velocity limit Vp at the fall point P3 in the same manner as in S102. The CPU 41 calculates the fall velocity V3 in the case where the current tip deceleration is maintained in the current cycle, based on the current tip velocity Vf. The CPU 41 makes the determination of S105 based on the calculated velocity limit Vp and the fall velocity V3.

For example, in the case where the current tip velocity Vf is relatively far from the velocity limit Vp at the fall point P3 in the case where the current tip deceleration is maintained, even if the CPU 41 maintains the current tip deceleration during the current cycle, the fall velocity V3 does not become equal to or less than the velocity limit Vp at the fall point P3 (S105: NO). In this case, the CPU 41 increases the current tip deceleration by a unit maximum tip jerk (S106). As a result, the tip velocity rapidly approaches the velocity limit Vp over time. The CPU 41 transitions the process to S108.

For example, in the case where the current tip deceleration is already close to the maximum tip deceleration, when the CPU 41 increases the current tip deceleration by a unit maximum tip jerk, the increased tip deceleration exceeds the maximum tip deceleration (S104: YES). Furthermore, for example, in the case where the current tip velocity Vf is already close to the velocity limit Vp at the fall point P3 in the case where the current tip deceleration is maintained, when the CPU 41 maintains the current tip deceleration during the current cycle, the fall velocity V3 becomes equal to or less than the velocity limit Vp at the fall point P3 (S105: YES). In such case, the CPU 41 maintains the current tip deceleration during the current cycle (S106). As a result, the tip velocity approaches the velocity limit Vp linearly over time. The CPU 41 transitions the process to S108.

After S103, S106, or S107, the CPU 41 performs a velocity update process (S108). In the velocity update process of S108, the CPU 41 calculates the tip velocity by subtracting the velocity change amount for one cycle in the case of deceleration with the tip deceleration calculated in S103, S106, or S107 from the current tip velocity Vf. The CPU 41 outputs signals to each of the X-axis motor 61, the Y-axis motor 62, the Z-axis motor 63, the A-axis motor 64, and the C-axis motor 65 so that the actual tip velocity in the machine tool 1 becomes the calculated tip velocity, and controls each drive axis during the current cycle. As a result, the CPU 41 controls the tip point and tip velocity. The CPU 41 returns the process to the main process shown in FIG. 24.

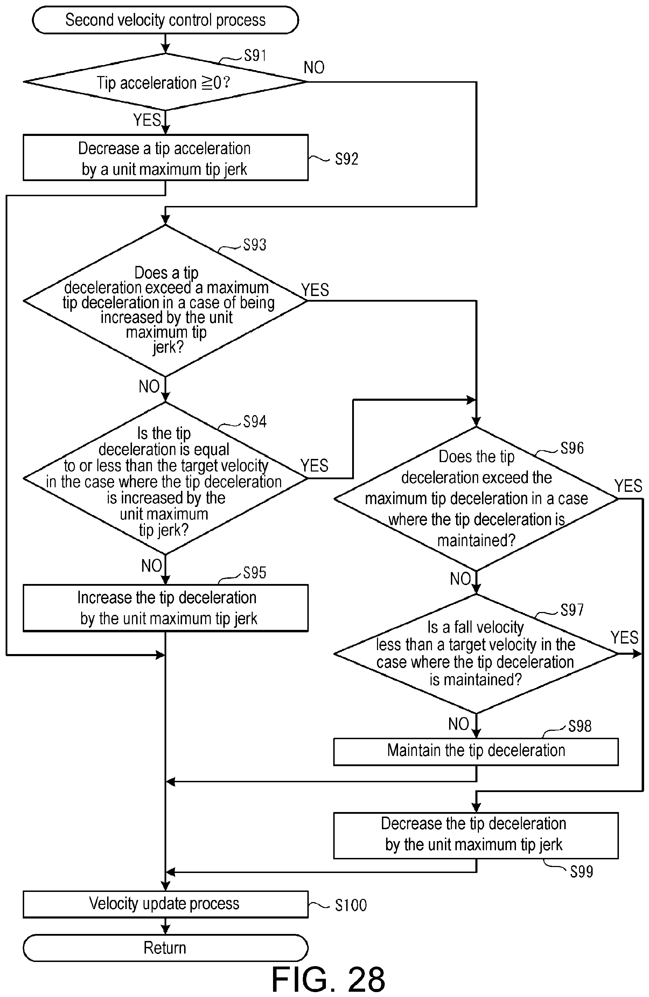

Referring to FIG. 28, the details of the second velocity control process are described. When the second velocity control process starts, the CPU 41 determines whether the current tip acceleration is equal to or greater than "0 m/s^2" (S91). For example, in the case where the tool tip is still accelerating immediately after the transition from the first velocity control process to the second velocity control process, the current tip acceleration is equal to or greater than "0 m/s^2" (S91: YES). In this case, the CPU 41 reduces the current tip acceleration by a unit maximum tip jerk (S92). As a result, the velocity curve of the tool tip transitions to form a peak. The CPU 41 transitions the process to S100.

For example, as the CPU 41 reduces the tip acceleration in S92, the tip acceleration approaches 0 m/s^2, and the current tip acceleration becomes less than "0 m/s^2" (S91: NO). In this case, the CPU 41 determines whether the tip deceleration in the case where the current tip deceleration is increased by a unit maximum tip jerk exceeds the maximum tip deceleration (S93). In S93, the CPU 41 calculates the maximum tip deceleration at the fall point P3 based on the fall velocity V3 and the maximum axis acceleration. The CPU 41 calculates the tip deceleration in the case where the current tip deceleration is increased by a unit maximum tip jerk, based on the maximum tip jerk stored in the flash memory 44. The CPU 41 makes the determination of S93 based on the calculated tip deceleration and the maximum tip deceleration.

For example, in the case where the current tip deceleration is relatively far from the maximum tip deceleration, even if the CPU 41 increases the current tip deceleration by a unit maximum tip jerk, the increased tip deceleration does not exceed the maximum tip deceleration (S93: NO). In this case, the CPU 41 determines whether the fall velocity V3 in the case where the current tip deceleration is increased by a unit maximum tip jerk becomes less than the target velocity Vd (S94). In S94, the CPU 41 calculates the fall velocity V3 in the case where the current tip deceleration is increased by a unit maximum tip jerk, based on the maximum tip jerk stored in the flash memory 44. The CPU 41 makes the determination of S94 based on the calculated fall velocity V3 and the target velocity Vd.

For example, in the case where the current tip velocity Vf is relatively far from the target velocity Vd, even if the CPU 41 increases the current tip deceleration by a unit maximum tip jerk, the fall velocity V3 does not become less than the target velocity Vd (S94: NO). In this case, the CPU 41 increases the current tip deceleration by a unit maximum tip jerk (S95). As a result, the tip velocity rapidly approaches the target velocity Vd over time. The CPU 41 transitions the process to S100.

For example, in the case where the current tip deceleration is already close to the maximum tip deceleration, when the CPU 41 increases the current tip deceleration by a unit maximum tip jerk, the increased tip deceleration exceeds the maximum tip deceleration (S93: YES). Furthermore, for example, in the case where the current tip velocity Vf is already close to the target velocity Vd, when the CPU 41 increases the current tip deceleration by a unit maximum tip jerk, the fall velocity V3 becomes less than the target velocity Vd (S94: YES). In such case, the CPU 41 determines whether the tip deceleration exceeds the maximum tip deceleration during the current cycle in the case where the current tip deceleration is maintained during the current cycle (S96). The CPU 41 makes the determination of S96 based on the current tip deceleration and the calculated maximum tip deceleration.

In the case where the maximum tip deceleration is maintained or increased from the current position Pf to the fall point P3, even if the CPU 41 maintains the current tip deceleration during the current cycle, the maintained tip deceleration does not exceed the maximum tip deceleration (S96: NO). In this case, the CPU 41 determines whether the fall velocity V3 in the case where the current tip deceleration is maintained during the current cycle becomes less than the target velocity Vd (S97). In S97, the CPU 41 calculates the fall velocity V3 in the case where the current tip deceleration is maintained in the current cycle, based on the current tip velocity. The CPU 41 makes the determination of S97 based on the target velocity Vd and the calculated fall velocity V3.

For example, in the case where the current tip velocity Vf is relatively far from the target velocity Vd, even if the CPU 41 maintains the current tip deceleration during the current cycle, the fall velocity V3 does not become less than the target velocity Vd (S97: NO). In this case, the CPU 41 maintains the current tip deceleration during the current cycle (S98). As a result, the tip velocity approaches the target velocity Vd linearly over time. The CPU 41 transitions the process to S100.

With the maximum tip deceleration decreasing to a level lower than the current maximum tip deceleration during the current cycle, the maintained tip deceleration may exceed the maximum tip deceleration during the current cycle (S96: YES). Furthermore, for example, in the case where the current tip velocity Vf is already close to the target velocity Vd, if the CPU 41 maintains the current tip deceleration during the current cycle, the first rise velocity V1 becomes less than the target velocity Vd (S97: YES). In such cases, the CPU 41 decreases the current tip deceleration by a unit maximum tip jerk (S99). As a result, the tip velocity gradually approaches the target velocity Vd over time. The CPU 41 transitions the process to S100.

After S92, S95, S98, or S99, the CPU 41 performs a velocity update process (S100). In the velocity update process of S100, the CPU 41 subtracts the velocity change amount for one cycle in the case of the deceleration with the tip deceleration calculated in S92, S95, S98, or S99 from the current tip velocity Vf. However, in the case where the value calculated in S92 is a positive value (i.e., acceleration), the CPU 41 adds the velocity change amount for one cycle in the case of acceleration with the calculated tip acceleration to the current tip velocity Vf. The CPU 41 outputs signals to each of the X-axis motor 61, the Y-axis motor 62, the Z-axis motor 63, the A-axis motor 64, and the C-axis motor 65 so that the actual tip velocity in the machine tool 1 becomes the calculated tip velocity, and controls each drive axis during the current cycle. As a result, the CPU 41 controls the tip point and tip velocity. The CPU 41 returns the process to the main process shown in FIG. 24.

Returning to the description of FIG. 24, after the first velocity control process (S34) or the second velocity control process (S35), the CPU 41 determines whether the current position Pf reaches the end point Pe (Nnow) (S36). In the case where the current position Pf does not reach the end point Pe (Nnow) (S36: NO), the CPU 41 returns the process to S31. Every time when the CPU 41 repeats the first velocity control process or the second velocity control process, the current position Pf moves toward the end point Pe (Nnow). In the case where the current position Pf reaches the end point Pe (Nnow) (S36: YES), the CPU 41 determines whether Nnow is less than Nend (S41).

In the case where the block Nnow+1 is included in the look-ahead blocks, Nnow becomes less than Nend (S41: YES). In this case, the CPU 41 determines whether the target block Nd is the current block Nnow (S42).

In the case where the look-ahead end point block is the target block Nd, if Nnow is less than Nend, the target block Nd does not become the current block Nnow. On the other hand, in the case where the transition target block is the target block Nd, even if Nnow is less than Nend, the target block Nd may become the current block Nnow.

In the case where the look-ahead end point block is the target block Nd, the target block Nd is not the current block Nnow (S42: NO). Furthermore, in the case where the transition target block is the target block Nd and the current block Nnow does not reach the target block Nd, the target block Nd is not the current block Nnow (S42: NO). In such case, the CPU 41 transitions the process to S44 without performing S43.

When the transition target block Ntmp is the target block Nd, and the acceleration/deceleration process is repeated, the target block Nd reaches the current block Nnow (S42: YES). In this case, the CPU 41 sets the look-ahead end point block Nend as the target block Nd (S43). The CPU 41 sets "0 mm/min" as the target velocity Vd (S43). The CPU 41 transitions the process to S44.

The CPU 41 sets Nnow+1 as Nnow (S44). The CPU 41 returns the process to S22 shown in FIG. 23. Every time when the current position Pf reaches the end point Pe (Nnow) (S36: YES), in the case where there is a block Nend+1 in the NC program (S22: YES), the CPU 41 reads the block Nend+1 (S23). As a result, for example, when the current position Pf reaches the end point Pe (N1), the CPU 41 reads the block N7 from the NC program. The CPU 41 stores each calculated value in each area corresponding to the block N7 in the block information storage area 431. Similarly, when the current position Pf reaches the end point Pe (N2), the CPU 41 stores each calculated value in each area corresponding to the block N8 in the block information storage area 431. As a result, the block information storage area 431 shown in FIG. 4 becomes a state where each calculated value is stored in all areas corresponding to each of the blocks N1 to N8.

As shown in FIG. 23, in S22, in the case where the look-ahead end point block Nend becomes the final block of the NC program, there is no block Nend+1 in the NC program (S22: NO). For example, in the case where block N8 is the look-ahead end point block Nend, there is no block N9 in the NC program (S22: NO). In this case, the CPU 41 transitions the process to S31 shown in FIG. 24.

In the case where the CPU 41 sets block Ntmp-1 as the target block Nd in S72 shown in FIG. 25 during the immediately preceding reverse interpolation process (S31), the target block Nd is not the look-ahead end point block Nend (S25: NO). In this case, the CPU 41 sets Nend+1 as Nend (S29). The CPU 41 transitions the process to S31 shown in FIG. 24 without resetting the target block Nd (S26) and without resetting the reverse interpolation point Prev, the reverse interpolation velocity Vrev, and the reverse interpolation acceleration Arev (S20). As a result, the target block Nd, the reverse interpolation point Prev, the reverse interpolation velocity Vrev, and the reverse interpolation acceleration Arev are fixed to the values set in S72 or S73 shown in FIG. 25.

The look-ahead blocks stop being read when the final block becomes the look-ahead end point block Nend (S22: NO). In this case, the look-ahead end point block is fixed at the final block. On the other hand, with the acceleration/deceleration process being performed, the current block transitions to subsequent blocks sequentially in the processing order. As shown in FIG. 24, with the acceleration/deceleration process being repeated, the current block Nnow reaches the look-ahead end point block Nend, and subsequently, the current position Pf reaches the end point Pe (Nend) (S41: NO). In this case, since there is no block Nnow+1 in the NC program, the CPU 41 terminates the main process.

### <Effects of the Embodiment>

As described above, in the present embodiment, the CPU 41 determines the target block Nd and determines the target velocity Vd at the command point of the determined target block Nd. The CPU 41 calculates the first rise velocity V1 based on the maximum tip jerk, the current tip velocity Vf, and the current tip acceleration. The CPU 41 sequentially calculates the reverse interpolation point Prev. Every time when calculating the reverse interpolation point Prev, the CPU 41 calculates the second rise velocity V2 based on the maximum tip jerk, the reverse interpolation velocity Vrev, and the reverse interpolation acceleration Arev. The CPU 41 calculates the reverse interpolation point Prev until the second rise velocity V2 becomes equal to or greater than the first rise velocity V1. Accordingly, by performing the acceleration/deceleration process in accordance with the reverse interpolation by the CPU 41, even if the tip velocity increases to the maximum along the tip path, the tool tip is suppressed from not decelerating to the target velocity Vd at the command point of the target block Nd. Therefore, the numerical control device 40 can more easily move the tool tip at the maximum tip velocity at which the tool tip can decelerate to the target velocity Vd at the command point of the target block Nd. Furthermore, the CPU 41 performs the acceleration/deceleration process while calculating the reverse interpolation points Prev, and calculates the velocity curve of the tool tip. Thus, the CPU 41 can more easily suppress the amount of calculation by the numerical control device 40 before the acceleration/deceleration process as compared to the case of calculating the velocity curve of the tool tip and performing the acceleration/deceleration process. Therefore, the CPU 41 contributes to the advantage of suppressing the increase in the movement time of the tool tip while suppressing the amount of calculation for calculating the velocity curve before the acceleration/deceleration process.

In the case where there is a transition block, the CPU 41 determines the block that is one block before the transition target block in the processing order as the target block Nd, and sets the lowest start point velocity Vs of the transition block as the target velocity Vd. Therefore, reverse interpolation is performed so that the tool tip can decelerate to the start point velocity Vs of the look-ahead block one block after the newly determined target block as the target velocity Vd at the command point of the newly determined target block Nd. Thus, the CPU 41 contributes to the advantage of suppressing the increase in the movement time of the tool tip while suppressing the amount of calculation for calculating the velocity curve of the tool tip before the acceleration/deceleration process, while following the upper limit of the tip velocity allowed at the command point of the block.

In the case where the total distance of the tip movement amount L1, the tip movement amount L2, and the tip movement amount L3 is equal to or greater than the remaining movement, the CPU 41 decelerates the tool tip at the tip deceleration based on the maximum tip deceleration and the maximum tip jerk so that the tip velocity (first rise velocity V1) does not become less than the target velocity Vd. According to this, the CPU 41 decelerates the tool tip to the maximum extent within the range of the allowed tip deceleration and tip jerk, and decelerates the tool tip to decelerate to the target velocity Vd at the command point of the target block Nd. Therefore, the increase in the deceleration time of the tool tip is suppressed. As a result, the numerical control device 40 can more easily secure a longer acceleration time of the tool tip. Thus, the CPU 41 contributes to the advantage of suppressing the increase in the movement time of the tool tip.

In the case where the total distance of the tip movement amount L1, the tip movement amount L2, and the tip movement amount L3 is not equal to or greater than the remaining movement, the CPU 41 accelerates the tool tip at the tip acceleration based on the maximum tip acceleration and the maximum tip jerk so that the tip velocity (first rise velocity V1) at the first rise point P1 does not exceed the velocity limit Vp at the first rise point P1. According to this, the CPU 41 accelerates the tool tip to the maximum extent within the range of allowed tip acceleration and tip jerk so that the first rise velocity V1 does not exceed the velocity limit Vp at the first rise point P1. Thus, the CPU 41 contributes to the advantage of suppressing the increase in the movement time of the tool tip.

The CPU 41 reads blocks sequentially as the look-ahead blocks up to the look-ahead end point block Nend. In the case of reading the look-ahead end point block Nend, the CPU 41 calculates the reverse interpolation point Prev. In this case, the reverse interpolation point Prev is not calculated every time when the look-ahead block is read. Thus, the CPU 41 contributes to the advantage of suppressing the increase in the processing load for calculating the reverse interpolation point Prev.

In the case where the acceleration/deceleration process to the command point of the current block Nnow is completed, the CPU 41 newly reads the block one block after the current look-ahead end point block Nend as the look-ahead end point block Nend in the processing order. In the case where the look-ahead end point block Nend is newly read, the CPU 41 newly determines the target block Nd and also newly determines the target velocity Vd. According to this, the CPU 41 newly reads a block as the look-ahead end point block Nend every time when the CPU 41 completes the acceleration/deceleration process of the current block Nnow. In other words, the CPU 41 does not always read all of multiple blocks as look-ahead blocks at once. Thus, the CPU 41 contributes to the advantage of suppressing the control load for reading the look-ahead blocks.

The machine tool 1 includes three linear axes (X-axis, Y-axis, Z-axis) and two rotary axes (A-axis, C-axis). Therefore, the machine tool 1 contributes to the advantage of performing complex machining, such as changing the posture (inclination) of the tool 3 relative to the workpiece W. On the other hand, as the movement of the tool 3 relative to the workpiece W becomes more complex, it may become difficult to analytically calculate the velocity limit and the maximum tip acceleration. Thus, it may become difficult to determine the entire velocity curve of the tool tip before the acceleration/deceleration process. In response to this, in the embodiment, the CPU 41 dynamically performs the reverse interpolation process in parallel with the acceleration/deceleration process. As a result, the velocity curve of the tool tip is calculated in parallel with the acceleration/deceleration process. Therefore, the CPU 41 contributes to the advantage of suppressing the control load required to calculate the velocity curve of the tool tip. Thus, the CPU 41 contributes to the advantage of enabling complex machining by the machine tool 1 while suppressing the control load required to calculate the velocity curve of the tool tip.

### <Correspondence between the embodiment and the disclosure>

In the embodiment, the workpiece W corresponds to the "target object" of the disclosure. The tool 3 corresponds to the "movement part" of the disclosure. The CPU 41 performing S12 and S23 shown in FIG. 23 corresponds to the "reading part" of the disclosure. The CPU 41 performing S14 shown in FIG. 23, S43 shown in FIG. 24, and S72 shown in FIG. 25 corresponds to the "determination part" of the disclosure. The CPU 41 performing S51 shown in FIG. 25 corresponds to the "first calculation part" of the disclosure. The CPU 41 performing S62 shown in FIG. 25 corresponds to the "reverse interpolation part" of the disclosure. The CPU 41 performing S53 and S63 shown in FIG. 25 corresponds to the "second calculation part" of the disclosure.

The CPU 41 performing S24 shown in FIG. 23 corresponds to the "third calculation part" of the disclosure. The CPU 41 performing S71 shown in FIG. 25 corresponds to the "first judgment part" of the disclosure. The CPU 41 performing S33 shown in FIG. 24 corresponds to the "second judgment part" of the disclosure. The CPU 41 performing S100 shown in FIG. 28 corresponds to the "first velocity control part" of the disclosure. The CPU 41 performing S82 or S85 shown in FIG. 26 corresponds to the "fourth calculation part" of the disclosure. The CPU 41 performing S88 shown in FIG. 26 or S108 shown in FIG. 27 corresponds to the "second velocity control part" of the disclosure. The CPU 41 performing S88 shown in FIG. 26, S108 shown in FIG. 27, or S100 shown in FIG. 28 corresponds to the "block processing part" of the disclosure.

The turntable 29 corresponds to the "holding part" of the disclosure. The spindle 9 corresponds to the "spindle" of the disclosure. S12 and S23 shown in FIG. 23 correspond to the "reading process" of the disclosure. S14 shown in FIG. 23, S43 shown in FIG. 24, and S72 shown in FIG. 25 correspond to the "determination process" of the disclosure. S51 shown in FIG. 25 corresponds to the "first calculation process" of the disclosure. S20 shown in FIG. 23, S62 and S73 shown in FIG. 25 correspond to the "reverse interpolation process" of the disclosure. S53 and S63 shown in FIG. 25 correspond to the "second calculation process" of the disclosure. The CPU 41 corresponds to the "computer" of the disclosure.

### <Modified Examples>

The disclosure may be modified in various ways from the embodiment. For example, the drive axes of the machine tool 1 are not limited to 5 axes, but may be 1 axis, 2 axes, 3 axes, 4 axes, or 6 or more axes. The method of driving the drive axes by the machine tool 1 is not limited to the embodiment. The machine tool 1 may be a lathe, a robot, a parallel mechanism machine, etc.

In the embodiment, the machine tool 1 rotates the turntable 29 with two drive axes, i.e., A-axis and C-axis. In contrast, the machine tool 1 may also rotate the spindle 9 with two drive axes, i.e., A-axis and C-axis, to change the posture of the spindle 9 relative to the workpiece W. The machine tool 1 may also rotate the spindle 9 with one drive axis of A-axis and C-axis to change the posture of the spindle 9 relative to the workpiece W, and rotate the turntable 29 with the other drive axis of A-axis and C-axis. In such case as well, the machine tool 1 contributes to the advantage of performing complex machining, such as changing the posture (inclination) of the tool 3 relative to the workpiece W.

The NC program does not necessarily have to directly command the command points by coordinate values. For example, in the NC program, a tool orientation vector may be commanded instead of the coordinate values of the A-axis and C-axis. In this case, the CPU 41 may also calculate the coordinate values of the command points for A-axis and C-axis based on the tool orientation vector.

The CPU 41 does not necessarily have to calculate the first rise velocity V1, the reverse interpolation point Prev, and the second rise velocity V2 for all of the blocks. For example, the CPU 41 may also calculate the first rise velocity V1, calculate the reverse interpolation point Prev, and calculate the second rise velocity V2 only for one of the multiple blocks (e.g., , a block whose code is G0).

The look-ahead upper limit value Npara may not be provided. In other words, the CPU 41 may, prior to the reverse interpolation process (S31), read up to the final block as the look-ahead blocks regardless of the number of the blocks. The CPU 41 may also determine the target block Nd and the target velocity Vd every time when the CPU 41 reads one look-ahead block.

The method of determining the tip acceleration in the first velocity control process is not limited to the embodiment. For example, the CPU 41 may omit some or all of the determinations in S81, S82, S84, and S85. For instance, in the case where all of the determinations in S81, S82, S84, and S85 are omitted, the CPU 41 may always increase by a unit maximum tip jerk amount. In the first velocity control process, the CPU 41 may, instead of or in addition to the determinations in S81, S82, S84, and S85, make determinations regarding the tip velocity and tip acceleration at the current position Pf or at a point between the current position Pf and the first rise point P1 (e.g., an intermediate point).

The CPU 41 may impose a greater restriction on either or both of the maximum tip acceleration and the velocity limit Vp in some or all of the determinations in S81, S82, S84, and S85, as compared to the above embodiment. The method of determining the deceleration in the second velocity control process is not limited to the embodiment, either, like the method of determining the acceleration in the first velocity control process. For example, the CPU 41 may omit some or all of the determinations in S93, S94, S96, and S97. The CPU 41 may impose a greater restriction on the maximum tip deceleration in either or both of the determinations in S93 and S96, as compared to the embodiment.

Furthermore, for example, if the increased tip acceleration exceeds the maximum tip acceleration and the current tip acceleration is maintained in the case where the current tip acceleration is increased by the unit maximum tip jerk, the maintained tip acceleration may be less than the maximum tip acceleration. In such case, the CPU 41 may set the tip acceleration to match the maximum tip acceleration. Likewise, if the increased tip deceleration exceeds the maximum tip deceleration and the current tip deceleration is maintained in the case where the current tip deceleration is increased by the unit maximum tip jerk, when the maintained tip deceleration is less than the maximum tip deceleration, the CPU 41 may set the tip deceleration to match the maximum tip deceleration. In S81, S84, S93, S96, S101, or S104, the CPU 41 may make a determination based on the maximum tip acceleration or the maximum tip deceleration at the current position Pf instead of the maximum tip acceleration at the first rise point P1 or the maximum tip deceleration at the fall point P3. For example, in S84, the CPU 41 may determine whether the maintained tip acceleration exceeds the maximum tip acceleration at the current position Pf if the current tip acceleration is maintained during the current cycle.

In the embodiment, the CPU 41 calculates the arrival block (S54, S64) and performs a process according to whether a transition block is present. Comparatively, it may also be that the CPU 41 does not calculate the arrival block and does not determine whether a transition block is present. In this case, the CPU 41 may omit S72 and S73, and may always set the target block Nd as the look-ahead end point block Nend.

In the embodiment, the maximum axis acceleration indicates the upper limit of the allowed axis acceleration or axis deceleration. Comparatively, the maximum axis acceleration may indicate the upper limit of the allowed axis acceleration. In this case, the maximum axis deceleration, which indicates the upper limit of the allowed axis deceleration, may be stored in the flash memory 44 separately from the maximum axis acceleration.

In the embodiment, the first predetermined acceleration, the second predetermined acceleration, the third predetermined acceleration, the first predetermined deceleration, or the second predetermined deceleration may be, for example, the unit maximum tip jerk.

In the embodiment, for the sake of simplifying the description, positive acceleration is described as "acceleration" and negative acceleration as "deceleration". However, in the disclosure, the concept of acceleration includes negative acceleration as well.

### [Reference Signs List]

1. Machine tool;
9: Spindle;
29: Turntable;
40: Numerical control device;
41: CPU.

## Claims

1. A numerical control device, controlling a position and a velocity of a movement part that moves relatively with respect to a target object by reading an NC program formed by a plurality of blocks indicating command points on a movement path of the movement part and processing the blocks sequentially, the numerical control device comprising:
a reading part, reading a current block, which is a processing target among the blocks, and look-ahead blocks, whose processing order follows the current block among the blocks;
a decision part, deciding a target block, which is a target among the current block and the look-ahead blocks read by the reading part, and deciding a target velocity which is a velocity as a target of the movement part at the command point of the target block that is decided;
a first calculation part, calculating, on the movement path of the movement part, a first rise velocity based on a maximum jerk as an upper limit of an allowed jerk, a current velocity of the movement part, and a current acceleration of the movement part, wherein the first rise velocity is a velocity of the movement part at a first rise point, the first rise point being a position where an acceleration of the movement part changes to a first predetermined acceleration from the current acceleration of the movement part;
a reverse interpolation part, performing a reverse interpolation process as a process sequentially calculating reverse interpolation points that are positions where the movement part moves, from the command point of the target block decided by the decision part toward a start point of the current block in the movement path of the movement part, wherein an initial reverse interpolation point as the reverse interpolation point that is initially calculated, the velocity of the movement part at the initial reverse interpolation point, and the acceleration of the movement part at the initial reverse interpolation point are respectively the command point of the target block, the target velocity, and a second predetermined acceleration, and the reverse interpolation point to be calculated next to the current reverse interpolation point is a position where the movement part moves by an amount of movement for a predetermined time based on the velocity of the movement part and the acceleration of the movement part at the current reverse interpolation point, a maximum acceleration as an upper limit of an allowed acceleration, and the maximum jerk; and
a second calculation part, calculating, on the movement path of the movement part, from the reverse interpolation point toward the start point of the current block, a second rise velocity based on the maximum jerk, the velocity of the movement part at the reverse interpolation point as calculated by the reverse interpolation part and the acceleration of the movement part at the reverse interpolation point every time when the reverse interpolation part calculates the reverse interpolation point, wherein the second rise velocity is the velocity of the movement part at a second rise point, the second rise point being a position where the acceleration of the movement part changes from the acceleration of the movement part at the reverse interpolation point to a third predetermined acceleration,
wherein the reverse interpolation part calculates the reverse interpolation point until the second rise velocity calculated by the second calculation part becomes equal to or greater than the first rise velocity calculated by the first calculation part.

2. The numerical control device as claimed in claim 1, comprising:
a third calculation part, calculating a start point velocity as an upper limit of an allowed velocity of the movement part at a start point of the look-ahead blocks; and
a first determination part, determining whether there is a transition block in which the start point velocity becomes equal to or less than the second rise velocity, among the look-ahead blocks arranged in the processing order between the look-ahead block that is one block after the current block and the look-ahead block to which the second rise point belongs,
in a case where the first determination part determines that there is the transition block, the decision part determines the block that is one block before the transition block whose start point velocity is lowest in the processing order as the target block, and determines the lowest start point velocity of the transition block as the target velocity.

3. The numerical control device as claimed in claim 1 or 2, comprising:
a second determination part, determining, in a case where a movement distance of the movement part from the current position of the movement part in the current block to a direction toward the command point of the target block is set as positive and the movement distance of the movement part from the command point of the target block toward the current position of the movement part in the current block is set as negative, whether a total distance is equal to or greater than a remaining movement, wherein the total distance is a total of the movement distance of the movement part from the current position of the movement part in the current block to the first rise point, the movement distance of the movement part from the second rise point to the reverse interpolation point, and the movement distance of the movement part from the reverse interpolation point to the command point of the target block, and the remaining distance is the movement distance of the movement part from the current position of the movement part in the current block to the command point of the target block ; and
a first velocity control part, controlling, in a case where the second determination part determines that the total distance is equal to or greater than the remaining movement, the velocity of the movement part by using a deceleration based on a maximum deceleration, which is an upper limit of allowed deceleration, and the maximum jerk, so that the velocity of the movement part does not become less than the target velocity.

4. The numerical control device as claimed in claim 1 or 2, comprising:
a second determination part, determining, in a case where a movement distance of the movement part from the current position of the movement part in the current block to a direction toward the command point of the target block is set as positive and the movement distance of the movement part from the command point of the target block toward the current position of the movement part in the current block is set as negative, whether a total distance is equal to or greater than a remaining movement, wherein the total distance is a total of the movement distance of the movement part from the current position of the movement part in the current block to the first rise point, the movement distance of the movement part from the second rise point to the reverse interpolation point, and the movement distance of the movement part from the reverse interpolation point to the command point of the target block, and the remaining distance is the movement distance of the movement part from the current position of the movement part in the current block to the command point of the target block ; and
a fourth calculation part, calculating a velocity limit, which is a maximum velocity that follows an upper limit of an allowed velocity of the movement part at each interpolation point on the movement path; and
a second velocity control part, controlling, in a case where the second determination part determines that the total distance is not equal to or greater than the remaining movement, the velocity of the movement part by using an acceleration based on the maximum acceleration and the maximum jerk, so that the velocity of the movement part at the first rise point does not exceed the velocity limit at the first rise point calculated by the fourth calculation part.

5. The numerical control device as claimed in claim 1, wherein, in a case where a number of the blocks is greater than a number corresponding to a predetermined order, the reading part sequentially reads, as the look-ahead blocks, from the block that is one block after the current block in the processing order to a look-ahead end point block, which is the block after the predetermined order from the current block in the processing order,
wherein the reverse interpolation part calculates the reverse interpolation point in a case where the reading part reads the look-ahead end point block.

6. The numerical control device as claimed in claim 5, comprising: a block processing part, controlling a position and the velocity of the movement part by processing the current block read by the reading part,
wherein, in a case where the block processing part processes up to the command point of the current block, the reading part sets a next block, which is one block after the block processed as the current block by the block processing part in the processing order as the current block, and newly reads the block that is after the next block for the predetermined order in the processing order as the look-ahead end point block, and
in a case where the reading part newly reads the look-ahead end point block, the decision part newly decides the target block and also newly decides the target velocity.

7. A machine tool, comprising:
the numerical control device as claimed in claim 1;
a holding part, holding a workpiece; and
a spindle, to which a tool for machining the workpiece is mounted,
wherein the workpiece held by the holding part is machined by using at least three linear axes and one rotary axis,
the movement path is defined by a relative position of a tip of the tool with respect to the workpiece,
the maximum jerk is an allowed upper limit of a relative jerk of the tip of the tool with respect to the workpiece,
the maximum acceleration is an upper limit of a relative acceleration of the tip of the tool with respect to the workpiece, where an acceleration of each of the linear axes and the rotary axis is respectively equal to or less than an allowed acceleration of each of the linear axes and the rotary axis, and
the velocity of the movement part is defined by a relative velocity of the tip of the tool with respect to the workpiece.

8. The machine tool as claimed in claim 7, comprising the three linear axes and two rotary axes that rotate the holding part.

9. The machine tool as claimed in claim 7, comprising the three linear axes and two rotary axes that change a posture of the spindle with respect to the workpiece.

10. The machine tool as claimed in claim 7, comprising: the three linear axes, a rotary axis that changes a posture of the spindle with respect to the workpiece, and a rotary axis that rotates the holding part.

11. A numerical control method for controlling, by using a numerical control device, a position and a velocity of a movement part that moves relatively with respect to a target object by reading an NC program formed by a plurality of blocks indicating command points on a movement path of the movement part and processing the blocks sequentially, the numerical control method comprising:
a reading process of reading a current block, which is a processing target among the blocks, and look-ahead blocks, whose processing order follows the current block among the blocks;
a decision process of deciding a target block, which is a target among the current block and the look-ahead blocks read in the reading process, and deciding a target velocity which is a velocity as a target the movement part at the command point of the target block that is decided;
a first calculation process of calculating, on the movement path of the movement part, a first rise velocity based on a maximum jerk as an upper limit of an allowed jerk, a current velocity of the movement part, and a current acceleration of the movement part, wherein the first rise velocity is a velocity of the movement part at a first rise point, the first rise point being a position where an acceleration of the movement part changes to a first predetermined acceleration from the current acceleration of the movement part;
a reverse interpolation process of performing a reverse interpolation process as a process sequentially calculating reverse interpolation points that are positions where the movement part moves, from the command point of the target block decided in the decision process toward a start point of the current block in the movement path of the movement part, wherein an initial reverse interpolation point as the reverse interpolation point that is initially calculated, the velocity of the movement part at the initial reverse interpolation point, and the acceleration of the movement part at the initial reverse interpolation point are respectively the command point of the target block, the target velocity, and a second predetermined acceleration, and the reverse interpolation point to be calculated next to the current reverse interpolation point is a position where the movement part moves by an amount of movement for a predetermined time based on the velocity of the movement part and the acceleration of the movement part at the current reverse interpolation point, a maximum acceleration as an upper limit of an allowed acceleration, and the maximum jerk; and
a second calculation process of calculating, on the movement path of the movement part, from the reverse interpolation point toward the start point of the current block, a second rise velocity based on the maximum jerk, the velocity of the movement part at the reverse interpolation point as calculated in the reverse interpolation process and the acceleration of the movement part at the reverse interpolation point every time when the reverse interpolation point is calculated in the reverse interpolation process, wherein the second rise velocity is the velocity of the movement part at a second rise point, the second rise point being a position where the acceleration of the movement part changes from the acceleration of the movement part at the reverse interpolation point to a third predetermined acceleration,
wherein, in the reverse interpolation process, the reverse interpolation point is calculated until the second rise velocity calculated in the second calculation process becomes equal to or greater than the first rise velocity calculated in the first calculation process.

12. A numerical control program, causing a computer of a numerical control device for controlling a position and a velocity of a movement part that moves relatively with respect to a target obj ect by reading an NC program formed by a plurality of blocks indicating command points on a movement path of the movement part and processing the blocks sequentially to execute:
a reading process of reading a current block, which is a processing target among the blocks, and look-ahead blocks, whose processing order follows the current block among the blocks;
a decision process of deciding a target block, which is a target among the current block and the look-ahead blocks read in the reading process, and deciding a target velocity which is a velocity as a target the movement part at the command point of the target block that is decided;
a first calculation process of calculating, on the movement path of the movement part, a first rise velocity based on a maximum jerk as an upper limit of an allowed jerk, a current velocity of the movement part, and a current acceleration of the movement part, wherein the first rise velocity is a velocity of the movement part at a first rise point, the first rise point being a position where an acceleration of the movement part changes to a first predetermined acceleration from the current acceleration of the movement part;
a reverse interpolation process of performing a reverse interpolation process as a process sequentially calculating reverse interpolation points that are positions where the movement part moves, from the command point of the target block decided in the decision process toward a start point of the current block in the movement path of the movement part, wherein an initial reverse interpolation point as the reverse interpolation point that is initially calculated, the velocity of the movement part at the initial reverse interpolation point, and the acceleration of the movement part at the initial reverse interpolation point are respectively the command point of the target block, the target velocity, and a second predetermined acceleration, and the reverse interpolation point to be calculated next to the current reverse interpolation point is a position where the movement part moves by an amount of movement for a predetermined time based on the velocity of the movement part and the acceleration of the movement part at the current reverse interpolation point, a maximum acceleration as an upper limit of an allowed acceleration, and the maximum jerk; and
a second calculation process of calculating, on the movement path of the movement part, from the reverse interpolation point toward the start point of the current block, a second rise velocity based on the maximum jerk, the velocity of the movement part at the reverse interpolation point as calculated in the reverse interpolation process and the acceleration of the movement part at the reverse interpolation point every time when the reverse interpolation point is calculated in the reverse interpolation process, wherein the second rise velocity is the velocity of the movement part at a second rise point, the second rise point being a position where the acceleration of the movement part changes from the acceleration of the movement part at the reverse interpolation point to a third predetermined acceleration,
wherein, in the reverse interpolation process, the reverse interpolation point is calculated until the second rise velocity calculated in the second calculation process becomes equal to or greater than the first rise velocity calculated in the first calculation process.
